# EUROPEAN PATENT SPECIFICATION

(11) **EP 3 916 315 B1**
(45) Date of publication and mention of the grant of the patent: **28.08.2024**
(21) Application number: 21175283.7
(22) Date of filing: 21.05.2021
(51) Int. Cl.: F24F 8/10, H04R 1/02, H04R 17/00, F24F 8/80, G10K 11/00, G10K 9/122, H04R 7/04

(54) **PORTABLE AIR PURIFIER**
TRAGBARER LUFTREINIGER
PURIFICATEUR D'AIR PORTABLE

(30) Priority: 25.05.2020 KR 20200062508
(43) Date of publication of application: 01.12.2021
(73) Proprietor: LG Electronics Inc., Seoul 07336 (KR)
(72) Inventor: LEE, Jongcheol, 08592 Seoul (KR); LEE, Jangwoo, 08592 Seoul (KR)
(74) Representative: Ter Meer Steinmeister & Partner

(56) References cited:
- EP-A1- 3 567 833
- WO-A1-2018/229330
- WO-A1-2019/234444
- WO-A2-97/09852
- KR-A- 20180 073 760
- KR-A- 20180 127 275
- KR-B1- 101 994 906
- US-A1- 2017 303 048

## Description

### BACKGROUND

### [Technical Field]

The present invention relates to a portable air purifier, and one particular implementation relates to a portable air purifier that may be portably used.

### 2. Description of Related Art

An air purifier may be widely used in modern life and purify air by filtering physical particles such as dust, fine dust, and ultrafine dust, chemical substances such as odor particles and harmful gases, and microorganisms such as bacteria and viruses.

Air purifiers are becoming essential apparatuses even in general homes owing to an influence of urbanization, industrialization, and internationalization. In addition, the demand of the air purifier is rapidly increasing owing to an increase in fine dust, an increase in allergic patients, and an improvement in the standard of living.

The air purifier may have a large size such that the air purifier is used for an environment with an area exceeding 100 m² such as general home. A filter to filter the physical particles such as the dust, a filter to filter the chemical substances such as gas, and a filter to filter the microorganisms such as the bacterial viruses may be used for the air purifier in combination. That is, the air purifier having the large size may be used in a large space such that the air purifier accommodates various types of filters in combination.

However, using the large-sized air purifier in a small space such as a one room and an interior of a vehicle or a very large space such as a public library, or outdoors may be inefficient in terms of space utilization, mobility, and energy consumption. In addition, the small-sized air purifier may be more suitable for frequently moving users instead of the large-sized air purifier and the air purifier that may be portably used by individuals may also be more suitable for the frequently moving users. Under the background, portable air purifiers that may be portably used by individuals are being developed.

The portable air purifier has the small size and a light weight such that the user easily carries the portable air purifier. The user may easily use the portable air purifier in a desired place while easily carrying the portable air purifier by the user. That is, the portable air purifier may be suitable for users having a life pattern of frequently going out and moving several places rather than staying in one place such as at home for a long period of time.

Such a portable air purifier may perform various functions in addition to the simple air purification function based on the portability and the usability in various places.

For example, the portable air purifier may perform a function of a portable speaker in addition to the air purification function. In this case, it is not necessary to prepare both the portable air purifier and the portable speaker; instead, the air purification function and the function of the portable speaker may be selected as necessary or both functions may be used together with only one portable air purifier.

Korean Utility Model Registration No. 20-0419797 and Korean Patent Publication No. 10-2014-0028848 exemplify an example of an apparatus including an air purifier and a speaker.

Korean Utility Model Registration No. 20-0419797 discloses the air purifier with a built-in speaker. The air purifier to purify contaminated air in an indoor space includes the speaker. The speaker may be connected to a terminal socket disposed at one side of a housing of the air purifier, and the terminal socket may be connected to audio terminals such as a MPEG Audio Layer-3 player (MP3P), a compact disk player (CDP), and a portable multimedia player (PMP).

For the air purifier with the built-in speaker, the housing may include an additional space to accommodate the speaker and the terminal socket and a surface to expose the terminal socket to outside may be disposed in the housing thereof.

In addition, the housing of the air purifier with the built-in speaker may accommodate a speaker grill to transmit sound waves output from the speaker to the outside. The speaker grill may additionally include a suction inlet to suction air and a discharge outlet to discharge air.

Therefore, the size of the air purifier with the built-in speaker may be increased by a space to accommodate the speaker and the terminal socket and by an area of the housing to accommodate the suction inlet, the discharge outlet, and the speaker grill.

For this reason, it is difficult for the purifier with the built-in speaker to have a size suitable for portability. In addition, the air purifier with the built-in speaker is not suitable for the portability because the air purifier with the built-in speaker may be connected to external devices such as the MP3P, the CDP, the PMP, and the like by wire through the terminal socket. Moreover, the air purifier with the built-in speaker may not be provided as a portable apparatus, but may be used with power connection when the air purifier with the built-in speaker is installed in a predetermined place.

In particular, for the air purifier with the built-in speaker, the air purifier and the speaker do not need to share any components needed for operations thereof except for the housing. That is, the function of the air purifier may be sufficiently performed even without the speaker and the function of the speaker may be sufficiently performed even without the air purifier.

Therefore, the air purifier with the built-in speaker may not provide a new effect by combining the air purifier and the speaker, but may merely share a housing by the air purifier and the speaker.

KR 101 994 906 B1 discloses an air purifier with a Bluetooth speaker function, that comprises: a body unit having a slope formed on at least a part of a lower surface, having an air inlet formed on the slope, and having an air outlet formed on an upper surface; an air purification module disposed in the body unit to sterilize and deodorize air while passing the air supplied through the air inlet to generate and discharge clean air through the air outlet; and a Bluetooth speaker module installed in the body unit in parallel to the air purification module and having a speaker downwardly disposed to downwardly output audio to the output the audio outputted through the speaker to the outside through the air inlet.

### SUMMARY OF THE INVENTION

It is an object of the present invention to provide a portable air purifier capable of performing an air purification function and an acoustic function.

It is an object of the present invention to provide a portable air purifier capable of purifying air or providing sound even when carrying outside a place where power can be connected such as inside of a vehicle or an indoors or in places where power connection is difficult.

It is an object of the present invention to provide a portable air purifier capable of performing the air purification function and the acoustic function without degrading an air purification performance of the portable air purifier and maintaining a compact shape without changes in outer shape and size thereof occurring due to the addition of the acoustic function.

One or more of these objects are solved by invention defined by the features of the independent claim. Features of preferred embodiments are set out in the dependent claims.

According to the idea of the present invention, the portable air purifier includes a case accommodating air purification components, the case including a vibration plate (also named vibrator), and a piezoelectric element accommodated in the case configured to vibrate the vibration plate to generate sound. The vibration plate is disposed within the case or is part of the case.

The vibration plate may be engraved from an inner surface of the case.

According to an aspect which is an embodiment of the present invention, a portable air purifier includes: a case providing an accommodating space and at least one suction inlet defined at a first side or rear surface thereof and at least one discharge outlet defined at a second side or front surface thereof (preferably being disposed in a first direction); a blowing fan accommodated in the accommodating space and disposed between the suction inlet and the discharge outlet, a filter accommodated in the accommodating space and disposed between the suction inlet and the blowing fan, one or more acoustic portions respectively including a piezoelectric element accommodated in the accommodating space and configured to generate vibration by receiving or in response to a sound source signal; and one or more vibrators (or vibration plates) and configured to generate sound by receiving the vibration generated from the acoustic portion the vibrator includes or is a portion of the case having a second thickness that is smaller than the first thickness. The first side or rear surface including the suction inlet and the second side or front surface including the discharge outlet are disposed in a first direction and/or extend perpendicular to the first direction and/or may extend in vertical direction and/or may be open. It is understood that directional indications refer to an orientation of the air purifier during normal operation.

The air purifier according to this aspect may include one or more of the following features:

The case may include the first side or rear surface including the suction inlet and the second side or front surface including the discharge outlet, the first side and the second side being open surfaces of the case. That is, the case may have a frame-like structure or a frame-shape. A front panel may be provided at the second side (i.e. front surface) of the case. The front panel may cover the second side (i.e. front surface) of the case at least partially. The discharge outlet may be formed in the front panel. A rear panel and/or a rear cover may be provided at the first side (i.e. rear surface) of the case. The rear panel and/or the rear cover may cover the first side (i.e. rear surface) of the case at least partially. The suction inlet may be formed in the rear panel and/or in the rear cover. A flow path may be defined in the first direction between the suction inlet and the discharge outlet. The acoustic portion and/or the vibrator may be disposed at a side of or outside of the flow path.

The case has a first thickness. In particular, the case may have a uniform first thickness. The vibrator(s) is/are each integrated with the case and has/each have a second thickness that is smaller than the first thickness. Here, thickness of a surface may refer to a dimension perpendicular to a corresponding surface of the case.

The vibrator(s) may be concavely recessed from a portion of an inner surface of the case facing the blowing fan and the filter.

The acoustic portions may be advantageously coupled to the vibrator(s). Each vibrator may be coupled to one vibrator.

The acoustic portions may be disposed in a space surrounded by the vibrator(s) and an inner wall of the case surrounding the vibrator(s).

The acoustic portion may be disposed in the vibrator to block further protrusion than the inner surface of the case toward the blowing fan or the filter.

The case may include a pair of first surfaces (or lateral/side surfaces) orthogonal to a second direction that is perpendicular to the first direction, facing each other in the second direction, and spaced apart from each other by a predetermined distance. The case may include a second surface (or top surface) orthogonal to a third direction perpendicular to each of the first direction and the second direction and disposed at one side in the third direction of the pair of first surfaces. The case may include a third surface (or bottom/base surface) disposed in parallel to the second surface at a second side of the third direction of the pair of first surfaces. The vibrator(s) may be disposed on at least one of the pair of first surfaces.

That is, the case may include a pair of first surfaces (or lateral/side surfaces) respectively extending in vertical direction and/or extending in parallel to the first direction and/or connecting the first side (or rear surface) including the suction inlet and the second side (or front surface) including the discharge outlet. The at least one vibrator may be disposed on at least one of the first surfaces.

The vibrators may be disposed on different surfaces of the case. That is, the vibrators may be disposed on the pair, i.e. on both, of the first surfaces, respectively. The vibrators and/or the acoustic portions may be disposed on surfaces of the case facing each other. The vibrators may be disposed facing each other.

The first surface may be orthogonal to the second direction. The vibrator(s) may be concavely recessed from an inner surface of the first surface facing the blowing fan and the filter in the second direction.

The first surface may be spaced apart from each of the blowing fan and the filter by a first distance. The vibrator(s) may each be spaced apart from each of the blowing fan and the filter by a second distance that is larger than the first distance.

A length of the acoustic portion(s) in the second direction may be equal to or smaller than the second distance.

A stepped portion may be defined between an inner surface of each of the vibrator(s) and the inner surface of the first surface. An outer surface of each of the vibrator(s) may be flush with an outer surface of the first surface.

Two or more acoustic portions and two or more vibrators may be disposed on one of the first surfaces and two or more speakers are disposed on said first surface. The speakers may be configured to provide sound having different properties or perform different functions. Each speaker may include one the acoustic portions and the corresponding one of the vibrators.

The air purifier may further include a communicator configured to communicate with an external device. The acoustic portion(s) may be configured to generate vibration by receiving the sound source signal through the communicator.

According to the present invention, the portable air purifier may perform the air purification function and a sound transmission function with one apparatus, thereby improving satisfaction of the user desiring to perform various functions with one apparatus and achieving a high level of air purification performance and providing high level of sound quality.

In addition, according to the present invention, the portable air purifier may provide an effect of performing the air purification function or the acoustic function while carrying or even in the place where power connection is difficult by providing a rechargeable battery to the apparatus.

In addition, according to the present invention, electric components related to the air purification function, such as the blowing fan, the filter portion, and the battery, and acoustic components related to the acoustic function, such as the acoustic portion, are intensively accommodated in the case without affecting each other's functions. Therefore, the portable air purifier according to the present disclosure may have a compact shape, perform the air purification function and the acoustic function, and achieve the high level of air purification performance and acoustic performance.

In addition, according to the present invention, the case or a part thereof is used as the vibration plate or vibrator instead of additionally providing the vibration plate or vibrator, thereby maintaining the compact shape without changes in the outer shape and the size occurring due to the addition of the acoustic function and achieving the improved acoustic performance while maintaining a smooth appearance.

In addition, according to the present invention, the portable air purifier may provide an effect of reducing a manufacturing difficulty and manufacturing costs using the case itself as the vibration plate or vibrator instead of additionally providing the vibration plate.

### BRIEF DESCRIPTION OF THE DRAWINGS

FIG. 1 is a front perspective view showing an example portable air purifier according to the invention.
FIG. 2 is a front view showing the portable air purifier in FIG. 1
FIG. 3 is an exploded perspective view showing the portable air purifier in FIG. 1.
FIG. 4 is a rear perspective view showing the portable air purifier in FIG. 1.
FIG. 5 is a rear exploded perspective view showing the portable air purifier in FIG. 4.
FIG. 6 is a cross-sectional view taken along line "VI-VI" in FIG. 1.
FIG. 7 shows a first example of a configuration of a speaker using an acoustic portion.
FIG. 8 is a cross-sectional view taken along line "VIII-VIII" of FIG. 7.
FIG. 9 is a schematic configuration diagram showing an example configuration of a portable air purifier.
FIGS. 10 and 11 show a second example of a configuration of a speaker using an acoustic portion.
FIG. 12 shows a third example of a configuration of a speaker using an acoustic portion.
FIG. 13 shows a fourth example of a configuration of a speaker using an acoustic portion.

### DETAILED DESCRIPTION OF EXEMPLARY IMPLEMENTATIONS

Some embodiments of the present invention are described in detail with reference to accompanying drawings. Therefore, a person having ordinary knowledge in the art to which the present invention pertains will be able to easily understand the present invention which is defined in the claims. A detailed description of a well-known technology relating to the present invention may be omitted if it unnecessarily obscures the embodiments of the present invention which is defined in the claims. Hereinafter, one or more embodiments of the present invention are described in detail with reference to the accompanying drawings. Same reference numerals can be used to refer to same or similar components.

Terms such as first, second, and the like may be used herein to describe various elements of the present disclosure; however, these elements are not limited by these terms. These terms are intended to distinguish one element from another element. A first element may be a second element unless otherwise stated.

Example embodiments are provided so that this disclosure is thorough and complete and fully conveys the scope of the present invention to those skilled in the art.

It should be noted that the accompanying drawings are provided to easily understand the embodiments set forth herein. The size or the thickness of components in figures may be exaggerated or reduced for easy understanding, however, the protective scope of the present invention cannot be limitedly interpreted due to the size or the thickness from the drawings, which is exaggerated or reduced.

Terms used in the present disclosure are only used to describe specific examples or embodiments, and are not intended to limit the present invention. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, components, or a combination thereof, but do not preclude the presence or addition of one or more other features, integers, steps, operations, elements, components, or a combination thereof.

Terms such as first, second, and the like may be used herein to describe various elements of the present invention; however, the components are not limited by that terms. These terms are intended to distinguish one element from other elements.

Further, the terms "connected," "coupled," or the like are used such that, where a first component is connected or coupled to a second component, the first component may be directly connected or able to be connected to the second component, or one or more additional components may be disposed between the first and second components. Meanwhile, it should be understood that, when the first component is "directly connected" or "directly coupled" to the second component, one or more additional components may not be disposed between the first and second components.

In this document, the terms "upper," "lower," "on," "under," or the like are used such that, where a first component is arranged at "an upper portion" or "a lower portion" of a second component, the first component may be arranged in contact with the upper surface or the lower surface of the second component, or another component may be disposed between the first component and the second component. Similarly, where a first component is arranged on or under a second component, the first component may be arranged directly on or under (in contact with) the second component, or one or more other components may be disposed between the first component and the second component.

Unless otherwise defined, all terms (including technical and scientific terms) used herein have the same meaning as commonly understood by one of ordinary skill in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless explicitly defined herein.

In the present invention, unless otherwise stated, "A and/or B" means A, B, or both. Unless otherwise stated, "C to D" means "C or more and D or less".

### [Appearance of portable air purifier]

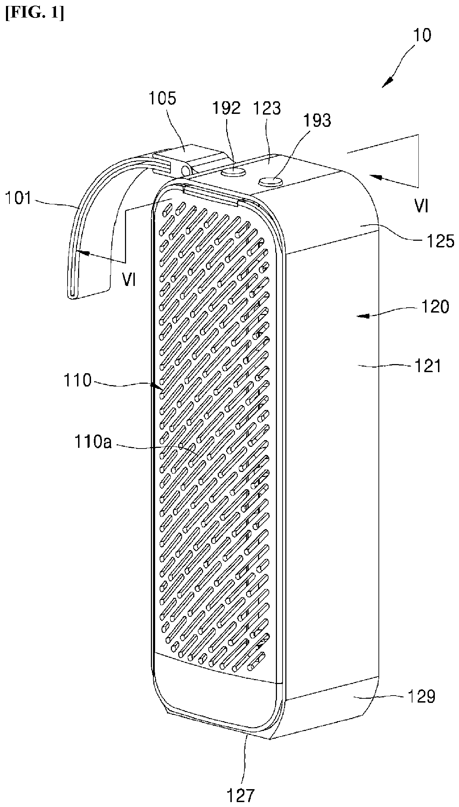

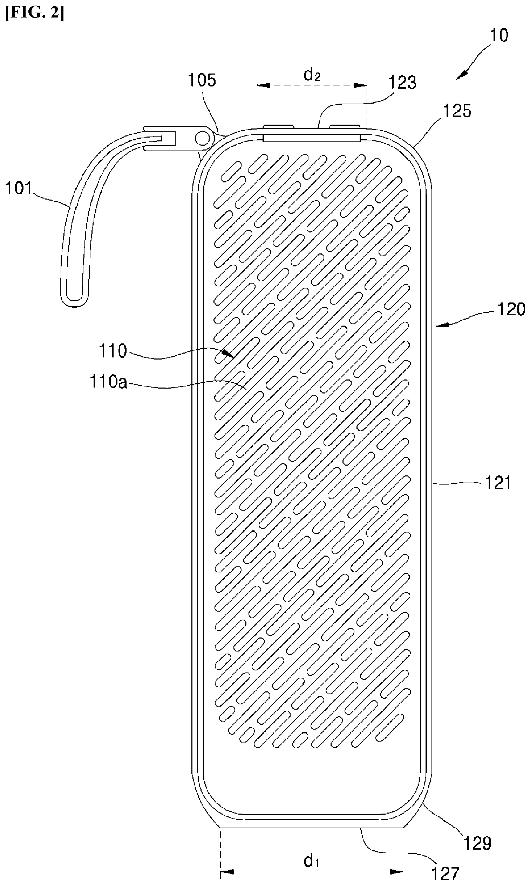

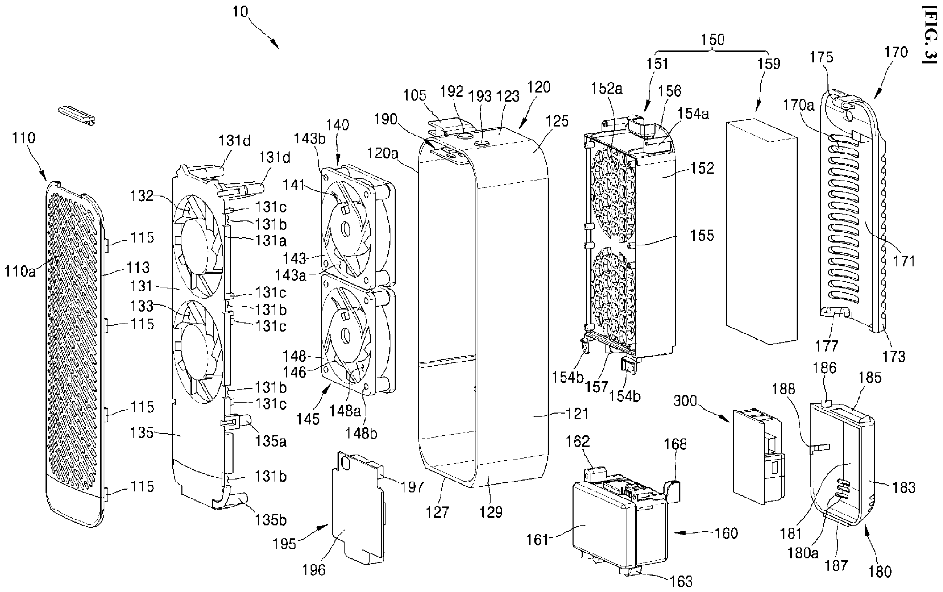

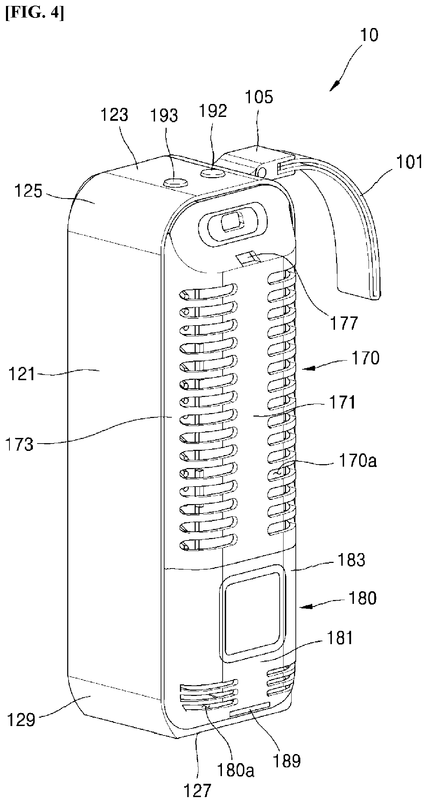

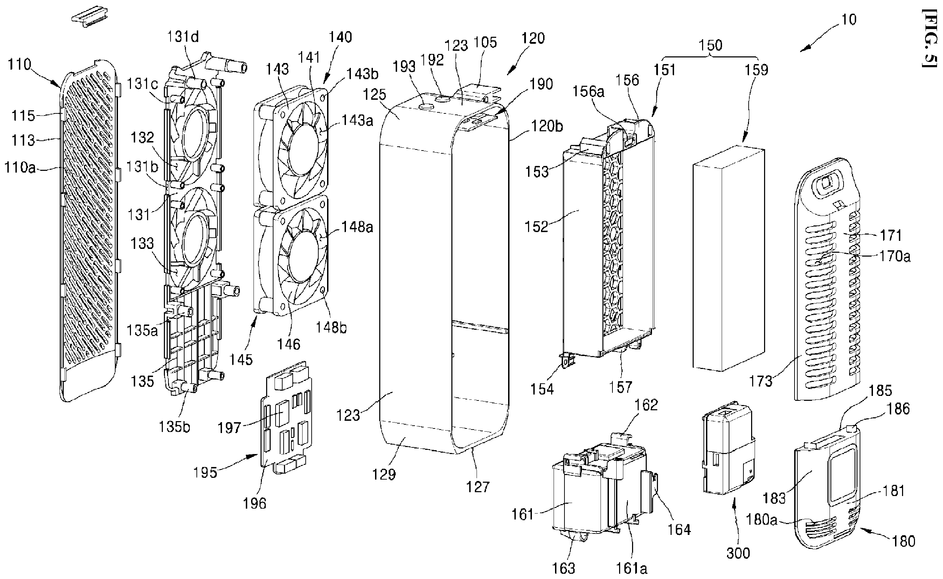

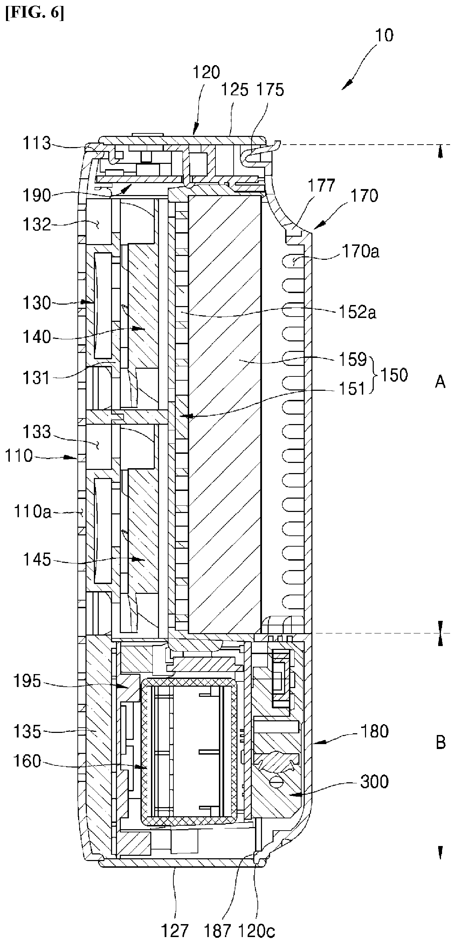

FIG. 1 is a front perspective view showing a portable air purifier according to a first embodiment of the present invention. FIG. 2 is a front view showing the portable air purifier in FIG. 1. In addition, FIG. 3 is an exploded perspective view showing the portable air purifier in FIG. 1 and FIG. 4 is a rear perspective view showing the portable air purifier in FIG. 1. In addition, FIG. 5 is a rear exploded perspective view showing the portable air purifier in FIG. 4 and FIG. 6 is a cross-sectional view taken along line "VI-VI" of FIG. 1.

Referring to FIGS. 1 to 5, a portable air purifier 10 according to an embodiment of the present invention may have an approximately hexahedral shape. The portable air purifier 10 includes a case 120, a front panel 110, and a rear panel 170.

The case 120 forms an external skeleton of the portable air purifier 10. A number of components are accommodated in the case 120.

The front panel 110 is coupled to a front side of the case 120. The front panel 110 forms a front appearance of the portable air purifier 10.

The rear panel 170 is coupled to a rear side of the case 120. The rear panel 170 forms a rear appearance of the portable air purifier 10.

The portable air purifier 10 may have a vertical hexahedral shape with a long vertical length. Accordingly, the user may use the portable air purifier 10 in a vertical state or a laying state. In addition, even if the portable air purifier 10 is used in the laying state in a place where shaking occurs, such as an inside a vehicle, the portable air purifier 10 does not roll and may stably maintain its position.

Directions are defined. "A forward direction" refers to an arrangement direction of the front panel 110 relative to the case 120 and "a rearward direction" refers to an opposite direction to the forward direction and an arrangement direction of the rear panel 170 relative to the case 120

### [Structure of portable air purifier]

According to this embodiment, a portable air purifier 10 may include a front panel 110, a case 120, a fan cover 130, a fan assembly 140, a filter portion 150, a battery 160, a rear panel 170, and a rear cover 180 as shown in FIGS. 1 to 6.

The front panel 110 is disposed at a foremost side of the portable air purifier 10 and forms a front appearance of the portable air purifier 10. Air purified by the portable air purifier 10 is discharged to outside through the front panel 110. For the air discharging, the front panel 110 includes a plurality of discharge outlets 110a.

The case 120 forms an external skeleton of the portable air purifier 10. An upper appearance, a side appearance, and a lower appearance of the portable air purifier 10 are defined by the case 120. The case 120 includes an accommodation space to accommodate various components of the portable air purifier 10 such as the fan cover 130, the fan assembly 140, the battery 160, and the filter portion 150. The case 120 advantageously has sufficient strength to protect the accommodated components from external impact.

The fan cover 130 is accommodated in the accommodating space inside the case 120 and is disposed at a front side of the fan assembly 140. That is, the fan cover 130 is disposed between the front panel 110 and the fan assembly 140 in the case 120.

The fan cover 130 couples the fan assembly 140 to the inside of the case 120. In addition, the fan cover 130 also induces air flow to block spread of the air blown by the fan assembly 140 to the surroundings and move straight forward. In addition, the fan cover 130 may be involved in coupling the filter portion 150 and the battery 160.

The fan assembly 140 is accommodated in the accommodating space inside the case 120 and is disposed between the fan cover 130 and the filter portion 150. That is, the fan assembly 140 is disposed at a rear side of the fan cover 130 and at a front side of the filter portion 150. The fan assembly 140 suctions air from the rear of the portable air purifier 10 and discharges the air to the front thereof.

The filter portion 150 is accommodated in the accommodating space inside the case 120 and is disposed between the fan assembly 140 and the rear panel 170. That is, the filter portion 150 is disposed at a rear side of the fan assembly 140 and at a front side of the rear panel 170. The filter portion 150 purifies the air suctioned through the rear side of the portable air purifier 10. The air purified while passing through the filter portion 150 is discharged to a space in front of the portable air purifier 10 through the fan assembly 140, the fan cover 130, and the front panel 110.

An acoustic portion 200 is accommodated in the case 120 and is disposed adjacent to the blowing fan assembly 140 and the filter portion 150. In addition, the acoustic portion 200 may be disposed above the battery 160.

In this embodiment, the acoustic portion 200 is disposed below the blowing fan assembly 140 and the filter portion 150. That is, the acoustic portion 200 may be disposed between the blowing fan assembly 140 and the battery 160.

As another example, the acoustic portion 200 may be disposed above the blowing fan assembly 140 and the filter portion 150.

As another example, when a plurality of fan assemblies are arranged in the vertical direction, the acoustic portion 200 may be disposed between the plurality of fan assemblies.

The arranged acoustic portion 200 may be operated by a power supplied by the battery 160 described below and may convert an electrical signal into sound wave and output the sound wave.

The battery 160 is accommodated in the accommodating space inside the case 120 and is disposed under the fan assembly 140 and the filter portion 150. The battery 160 may supply the power to drive the portable air purifier 10. For the power supply, the battery 160 may be electrically connected to at least one of the fan assembly 140, the filter portion 150, a sub printed circuit board (PCB) 190, or a main PCB 195 described below.

Directions are defined below. "A vertical direction" refers to an arrangement direction of the fan assembly 140 and the battery 160, or an arrangement direction of the filter portion 150 and the battery 160. In this case, the fan assembly 140 and the filter portion 150 may each be disposed on the battery 160.

In addition, "a first direction" refers to a forward and rearward direction, "a second direction" refers to a horizontal direction that is perpendicular to the first direction, and "a third direction" refers to a vertical direction that is perpendicular to each of the first direction and the second direction.

The rear panel 170 is disposed at a rearmost side of the case 120 together with the rear cover 180 and forms a rear appearance of the portable air purifier 10. The rear panel 170 is disposed at a rear side of the filter module 150. External air is suctioned into the portable air purifier 10 through the rear panel 170. For the air suction, the rear panel 170 includes a plurality of first suction inlets 170a.

In addition, the rear cover 180 is disposed at the rearmost side of the case 120 together with the rear panel 170 and forms the rear appearance of the portable air purifier 10. The rear cover 180 is disposed at the rear side of the battery 160. According to this embodiment, a rear area of the filter portion 150 is covered by the rear panel 170. In addition, a rear area of the battery 160 is covered by the rear cover 180.

### [Structure of case]

A portable air purifier 10 includes a case 120 to form an external skeleton thereof. An accommodating space is defined inside the case 120 and has openings at a front side and a rear side thereof.

According to this embodiment, the case 120 has a hexahedral shape defining openings at the front side and the rear side thereof and includes the accommodating space defining the openings at the front side and the rear side thereof. The case 120 may be made of metal. According to this embodiment, the case 120 is made of aluminum having a light weight and high strength.

A rear surface of the case 120 is opened to suction external air. In addition, the front surface of the case 120 is opened to discharge the air purified in the accommodating space inside the case 120. Various components of the portable air purifier 10 may be accommodated in the accommodating space of the case 120 through the open front surface and rear surface of the case 120.

A filter 159 described below is accommodated in or removed from the case 120 through the open rear surface of the case 120. The rear panel 170 is coupled to the opened rear surface of the case 120. The rear panel 170 coupled to the case 120 covers the open rear surface of the case 120.

The case 120 has the hexahedral shape with the openings at the front side and the rear side thereof and may include a first surface 121, a second surface 123, a first connection surface 125, a third surface 127, and a second connection surface 129.

The first surface 121 defines a side surface of the case 120. The first surface 121 defines a vertical plane that forms the wall blocking a side of the accommodating space inside the case 120. The case 120 includes a pair of first surfaces 121, and the pair of first surfaces 121 face each other and are spaced apart from each other by a predetermined distance. In this case, the pair of first surfaces 121 is disposed side by side with each other in a lateral direction.

The second surface 123 is disposed above the first surface 121 and defines a plane in parallel to a separation direction of the pair of first surfaces 121, that is, a horizontal plane. The second surface 123 forms an upper surface of the case 120.

The first connection surface 125 is disposed between the first surface 121 and the second surface 123. The first connection surface 125 is disposed between a first end of the second surface 123 and the first surface 121 disposed under the first end of the second surface 123, and a second end of the second surface 123 and the first surface 121 disposed below the second end of the second surface 123.

Each of the first connection surfaces 125 connects the first surface 121 and the second surface 123 in a rounded manner. The first connection surface 125 defines a rounded upper corner of the case 120 connecting the first surface 121 to the second surface 123, thereby improving safety and appearance beauty of the product.

The third surface 127 is disposed below each of the second surface 123 and the first surface 121 and forms a plane in parallel to the second surface 123. The third surface 127 forms a lower surface of the case 120. In addition, the third surface 127 supports the portable air purifier 10 to maintain the vertical state of the portable air purifier 10.

The second connection surface 129 is disposed between the first surface 121 and the third surface 127. The second connection surfaces 129 are disposed between a first end of the third surface 127 and the first surface 121 disposed above the first end of the third surface 127, and between a second end the third surface 127 and the first surface 121 disposed above the second end of the third surface 127.

Each of the second connection surfaces 129 connects the first surface 121 to the third surface 127 in a rounded manner. The second connection surface 129 defines a rounded upper corner of the case 120 connecting the first surface 121 to the third surface 127, thereby improving safety and appearance beauty of the product.

The case 120 includes a front groove 120a at a front edge thereof. The front groove 120a is recessed rearward from a portion of the front edge of the case 120. In this case, a stepped portion is defined at the front edge of the case 120 and has an inner side toward the accommodating space that is concaved rearward the case 120 than an outer side thereof.

In addition, the case 120 may define a rear groove 120b at a rear edge thereof. The rear groove 120b is recessed forward from a portion of the rear edge of the case 120. In this case, a stepped portion is defined at the rear edge of the case 120 and an inner side toward the accommodating space is concaved from the case 120 than an outer side thereof in a forward direction.

A power button 192 may be disposed on the case 120, that is, on the second surface 123 of the case 120. The power button 192 is provided as an operation button to turn on/off the power of the portable air purifier 10.

In addition, an air volume control button 193 may also be disposed on the case 120. The air volume control button 193 is provided as an operation button to increase or decrease the air volume of the portable air purifier 10. The air volume control button 193 may be disposed adjacent to the power button 192 to facilitate user identification and user operation.

In addition, the case 120 includes a button through-hole 123a to expose the power button 192 and the air volume control button 193 to the outside. The button through-hole 123a is provided as a hole through which the power button 192 and the air volume control button 193 disposed inside the case 120 are exposed to the outside of the case 120.

In this embodiment, two button through-holes 123a are defined on the second surface 123 of the case 120. One of the two button through-holes 123a exposes the power button 192 to the outside of the portable air purifier 10 and the other one thereof exposes the wind volume control button 193 to the outside of the portable air purifier 10.

As another example, one or three or more button through-holes 123a may be provided depending on a number of buttons of the portable air purifier 10 and may be defined on surfaces other than the second surface 123.

In addition, a strap coupler 105 may be disposed on the case 120 to couple a strap 101 to the case 120. The strap 101 is provided for the user to hold by hand. The user may lift the portable air purifier 10 by grabbing the strap 101 instead of holding the portable air purifier 10 with hands. That is, easy portability of the portable air purifier 10 may be improved using the strap 101.

The strap coupler 105 and the strap 101 may each be disposed at a boundary between the second surface 123 and the first connection surface 125 or on the first connection surface 125 to minimize adverse influence on the use of the portable air purifier 10 due to the presence of the strap 101.

That is, when the strap coupler 105 and the strap 101 are each disposed at the boundary between the second surface 123 and the first connection surface 125 or on the first connection surface 125, a possibility of interfering with, by the strap 101, the operation of the power button 192 or the wind volume control button 193 may be reduced when the portable air purifier 10 is used in the vertical state.

In addition, when the strap coupler 105 and the strap 101 are disposed as described above, it is possible to reduce a possibility that the seating state of the portable air purifier 10 becomes unstable the strap 101 is disposed under the portable air purifier 10 in a state in which the portable air purifier 10 is used in the laid state.

The accommodating space inside the case 120 may be divided into a first area (A) and a second area (B). When the accommodating space is divided vertically, an upper area is the first area (A) and a lower area is the second area (B). The first area (A) and the second area (B) are not physically divided, but are only conceptually divided.

According to this embodiment, the fan assembly 140 and the filter portion 150 are disposed in the first area (A), and the acoustic portion 200 and the battery 160 are disposed in the second area (B) among the components accommodated in the accommodation space.

### [Front panel]

A front panel 110 is disposed at a foremost side of a portable air purifier 10 and forms a front appearance of the portable air purifier 10. The front panel 110 includes a plurality of discharge outlets 110a.

For example, the plurality of discharge outlets 110a may penetrate or cut at least a portion of the front panel 110. Air purified inside the portable air purifier 10 may be discharged to a space in front of the portable air purifier 10 through the plurality of discharge outlets 110a formed as described above.

In this embodiment, the front panel 110 has a plate shape. The front panel 110 includes a front panel coupler 113 that extends rearward from at least a portion of an edge of the front panel 110.

The front panel coupler 113 couples the front panel 110 to a front side of the case 120. The front panel coupler 113 may be coupled to a fan cover 130 disposed at a foremost side thereof in the case 120 and may be coupled to a front side of the case 120. In this case, the front panel 113 and the fan cover 130 may be coupled by inserting the front panel coupler 113 into a front panel coupling groove 131a defined in the fan cover 130.

As another example, the front panel coupler 113 may be directly coupled to a front edge of the case 120 and may be coupled to the front side of the case 120. In this case, a coupling groove may be defined at the front edge of the case 120 to insert the front panel coupler 113.

In addition, the front panel 110 may further include a front panel locking portion 115. The front panel locking portion 115 firmly couples the front panel 110 to the front side of the case 120 together with the front panel coupler 113.

The front panel locking portion 115 protrudes from one side of the front panel coupler 113. The front panel locking portion 115 is coupled to the fan cover 130 through a front panel locking groove 131b defined at the edge of the fan cover 130.

For example, the front panel locking portion 115 may have a hook shape. The front panel locking portion 115 may be coupled to the fan cover 130 using the hook. A plurality of front panel locking portions 115 may be disposed in the front panel coupler 113 and may be spaced apart from one another by a predetermined distance.

### [Structure of fan cover]

A fan cover 130 is accommodated in an accommodating space inside a case 120. The fan cover 130 is disposed between a front panel 110 and a fan assembly 140 and between the front panel 110 and a battery 160. That is, the front panel 110 is disposed at a front side the fan cover 130 and the fan assembly 140 and the battery 160 are each disposed at a rear side of the fan cover 130.

The fan cover 130 may include a front panel coupling groove 131a into which the front panel 110 is inserted. For example, the front panel coupling groove 131a may be recessed from an edge of the fan cover 130 inward. The front panel 110 and the fan cover 130 may be coupled by inserting the front panel coupler 113 into the front panel coupling groove 131a.

In addition, the fan cover 130 may include a front panel locking groove 131b to which the front panel locking portion 115 of the front panel 110 is coupled. For example, the front panel locking groove 131b may be further recessed from a portion of the front panel coupling groove 131a.

The front panel locking portion 115 of the front panel 110 may be coupled to the front panel locking groove 131b using a hook. In the fan cover 130, a plurality of front panel locking grooves 131b may be defined at points corresponding to the points of the front panel locking portions 115.

The fan cover 130 may include an upper cover 131 and a lower cover 135. When the fan cover 130 is divided in a vertical direction, an upper area is the upper cover 131 and a lower area is the lower cover 135.

The upper cover 131 is disposed at a front side the fan assembly 140. An air discharge portion 132 is disposed in the upper cover 131. The air discharge portion 132 penetrates or cuts a portion of the upper cover 131. The air discharge portion 132 provides a passage to connect the front side of the case 120 to the blowing fan 141 of the fan assembly 140 in the fan cover 130.

As another example, the portable air purifier may include two or more fan assemblies, and accordingly, the fan cover may include two or more air discharge portions.

In addition, the upper cover 131 includes a first fastening boss 131c. The first fastening boss 131c protrudes rearward from a rear surface of the upper cover 131. The first fastening boss 131c may be coupled to the fan assembly by fitting. The fan cover 130 may be coupled to the fan assembly 140 by the coupling between the first fastening boss 131c and the fan assembly 140.

In addition, the upper cover 131 may further include a second fastening boss 131d. The second fastening boss 131d protrudes rearward from the rear surface of the upper cover 131. The second fastening boss 131d may be coupled to the filter portion 150 by fitting. As the second fastening boss 131d may be coupled to the filter portion 150 disposed at the rear side of the fan assembly 140, the second fastening boss 131d protrudes further than the first fastening boss 131c.

The lower cover 135 is disposed under the upper cover 131 including the air discharge portion 132. The lower cover 135 is disposed in the second area (B) inside the case 120. The upper cover 131 is disposed in the first area (A) inside the case 120.

The lower cover 135 is disposed at a front side of the battery 160. The lower cover 135 closes the front side of the battery 160 and supports the battery 160 from the front thereof.

The lower cover 135 may include a third fastening boss 135a. The third fastening boss 135a protrudes rearward from the rear surface of the lower cover 135. The third fastening boss 135a may be coupled to the filter portion 150 by fitting. That is, the second fastening boss 131d is a coupling point between the fan cover 130 and the filter portion 150 in the first area (A) and the third fastening boss 135a is a coupling point between the fan cover 130 and the filter portion 150 in the second area (B).

The fan cover 130 and the filter portion 150 may be coupled to each other at a plurality of points by the second fastening boss 131d defined at the upper portion thereof and the third fastening boss 135a defined at the lower portion thereof. Therefore, the fan cover 130 and the filter portion 150 may be coupled stronger and more stably. In addition, the fan assembly 140 disposed between the fan cover 130 and the filter portion 150 may also be stably coupled between the fan cover 130 and the filter portion 150.

In addition, the lower cover 135 may further include a fourth fastening boss 135b. The fourth fastening boss 135b protrudes rearward from the rear surface of the lower cover 135. The fourth fastening boss 135b may be coupled to the battery 160 by fitting. The fan cover 130 and the battery 160 may be coupled by fitting between the fourth fastening boss 135b and the battery 160.

### [Structure of fan assembly]

A portable air purifier 10 of this embodiment includes a fan assembly 140 to suction air from a rear side thereof and discharge the air to the front.

The fan assembly 140 is disposed between a fan cover 130 and a filter portion 150.

That is, the fan cover 130 is disposed at a front side of the fan assembly 140 and the filter portion 150 is disposed at a rear side of the fan assembly 140.

The fan assembly 140 is accommodated in an accommodating space inside the case 120 and is disposed in first area (A). In this case, the fan assembly 140 is provided at a position facing a rear surface of an upper cover 131 among the upper cover 131 and a lower cover 135 of the fan cover 130.

The fan assembly 140 includes a blowing fan 141, a fan motor, and a fan bracket 143.

The blowing fan 141 generates air flow. For example, the blowing fan 141 may include an axial fan. The air is suctioned into the case 120 through a rear panel 170, may be suctioned in an axial direction of the blowing fan 141 and then discharged in the axial direction of the blowing fan 141.

The fan motor is connected to the blowing fan 141 to provide a rotational force to the blowing fan 141. The fan motor may include a frequency-adjustable brushless direct current (BLDC) motor.

At least one of the blowing fan 141 or the fan motor is coupled to the fan bracket 143. In addition, the fan bracket 143 couples the blowing fan 141 to the fan cover 130.

The fan bracket 143 includes an opening 143a. The opening 143a provides a passage to guide air suction to the blowing fan 141 and air discharge from the blowing fan 141.

An opening 143a has a circular shape and penetrates the fan bracket 143. The blowing fan 141 is inserted into the opening 143a. That is, the opening 143a provides a space to accommodate the blowing fan 141 and a passage to suction the air to the blowing fan 141 and discharge the air from the blowing fan 141 inside the fan bracket 143.

In addition, the fan bracket 143 may further include a bracket fastener 143b. The bracket fastener 143b is provided as a means for coupling the fan assembly 140 to the fan cover 130.

The first fastening boss 131c defined on the upper cover 131 of the fan cover 130 may be coupled to the bracket fastener 143b by fitting. When the first fastening boss 131c and the bracket fastener 143b are coupled to each other by fitting, the first fastening boss 131c and the bracket fastener 143b are fastened using a predetermined fastening member to fasten the fan assembly 140 and the fan cover 130.

### [Structure of filter portion]

A filter portion 150 is disposed between a fan assembly 140 and a rear panel 170. That is, the fan assembly 140 is disposed at a front side the filter portion 150 and the rear panel 170 is disposed at a rear side of the filter portion 150.

The filter portion 150 is accommodated in an accommodating space inside a case 120 and is disposed in first area (A). In this case, the filter portion 150 is provided at a position facing the fan assembly 140 among the fan assembly 140 and the acoustic portion 200 and the battery 160 disposed below the fan assembly 140. The filter portion 150 may include a filter case 151 and a filter 159.

The filter case 151 forms the external skeleton of the filter portion 150. The filter case 151 may include a case body 152, a rear supporter 153, and a fan cover coupler.

The case body 152 forms a skeleton of the filter case 151. In this embodiment, the case body 152 has a hexahedral shape with an open rear surface. The case body 152 includes an insertion space to accommodate the filter 159. In addition, a rear side of the case body 152 is opened to provide a passage through which the filter 159 is inserted into the insertion space inside the case body 152.

A filter 159 is accommodated in the insertion space inside the case body 152. A seating groove or a seating protrusion may be defined on an inner surface of the case body 152 to firmly mount the filter 159 inside the filter case 151.

In addition, the case body 152 includes a through-hole 152a to provide a passage between the insertion space thereof and the fan assembly 140. The through-hole 152a passes through a front surface of the case body 152 in a forward and rearward direction. The through-hole 152a provides the passage to flow air passing through the filter 159 toward a blowing fan 141.

The case body 152 includes the plurality of through-holes 152a on the front surface thereof and each of the plurality of through-holes 152a passes through the front surface of the case body 152 in the forward and rearward direction.

In this embodiment, the case body 152 includes the plurality of through-holes 152a on the front surface thereof and each of the plurality of through-holes 152a has a hexagonal shape. In addition, the plurality of through-holes 152a are arranged in a honeycomb configuration, and accordingly, the case body 152 may have the honeycomb structure on the front surface thereof.

As described above, the case body 152 has the honeycomb structure on the front surface thereof, thereby providing the passage to flow air, obtaining rigidity, and achieving a lightweight of the filter case 151.

A fan cover coupler may include a first fan cover coupler 154a disposed on the case body 152 and a second fan cover coupler 154b disposed under the case body 152.

The first fan cover coupler 154a is coupled to a second fastening boss 131d of the fan cover 130 on the case body 152. In addition, the second fan cover coupler 154b is coupled to a third fastening boss 135a of the fan cover 130 below the rear supporter 153.

The second fastening boss 131d may be coupled to the first fan cover coupler 154a by fitting. In addition, a third fastening boss 135a may be coupled to the second fan cover coupler 154b by fitting. When the second fastening boss 131d and the third fastening boss 135a are coupled to the first fan cover coupler 154a and the second fan cover coupler 154b by fitting, the coupling between the fan cover 130 and the filter portion 150 may be made by fastening the second fastening boss 131d and the third fastening boss 135a to the first fan cover coupler 154a and the second fan cover coupler 154b using a predetermined fastening member.

The fan cover 130 and the filter case 151 receive forces in a direction toward each other when the first and second fan cover couplers 154a and 154b and the second and third fastening bosses 131d and 135a are coupled by the fastening member. That is, the fan cover 130 receives the force of moving the fan cover 130 rearward and the filter case 151 receives the force of moving the filter case 151 forward.

Based on the power, the fan cover 130 and the filter case 151 press the fan assembly 140 disposed between the fan cover 130 and the filter portion 150 from the front and the rear. In this case, the fan assembly 140 may be firmly coupled between the fan cover 130 and the filter portion 150 without an additional fastening operation.

That is, the fan cover 130, the fan assembly 140, and the filter case 151 may be fastened together by the fastening member used to fasten the fan cover 130 and the filter case 151. Therefore, the fan cover 130, the fan assembly 140, and the filter portion 150 may be assembled more easily and quickly.

In addition, a fan fastening boss 155 may be further defined in the filter case 151. The fan fastening boss 155 may be coupled to a bracket fastener 143b by fitting from a rear of the blowing fan 141.

According to this embodiment, the first fastening boss 131c is coupled to the bracket fastener 143b by fitting from the front of the blowing fan 141 and the fan fastening boss 155 is coupled to the bracket fastener 143b by fitting from the rear side of the blowing fan 141.

That is, the first fastening boss 131c and the fan fastening boss 155 are coupled to the bracket fastener 143b from the front side and the rear side. Therefore, the fan assembly 140 is disposed between the fan cover 130 and the filter portion 150 and is firmly coupled between the fan cover 130 and the filter portion 150.

In addition, a first coupler 162 disposed on a battery 160 described below may be provided between the second fan cover coupler 154b and the third fastening boss 135a. In this state, the second fan cover coupler 154b and the third fastening boss 135a may be coupled to each other. Therefore, the fan cover 130, the filter portion 150, and the battery 160 may be coupled together with a single fastening operation using one fastening member.

In addition, the filter case 151 may further include a protruding supporter 156. The protruding supporter 156 protrudes from the case body 152. In this embodiment, the protruding supporter 156 protrudes upward from an upper end of the case body 152. The protruding supporter 156 forms a plane that protrudes upward from the upper end of the case body 152. In this case, the protruding supporter 156 is disposed at a rear side of the case body 152 and forms a plane in parallel to a front surface of the case body 152.

A rear panel locking groove 156a is defined in the protruding supporter 156. The rear panel locking groove 156a is concaved from the protruding supporter 156, and a rear portion of the rear panel locking groove 156a is opened toward a rear panel 170. The rear panel locking groove 156a couples between the filter case 151 and the rear panel 170.

In addition, the filter case 151 may further include a sensor coupler 157. The sensor coupler 157 couples between the filter case 151 and a sensor portion 300 described below.

The portable air purifier 10 includes a filter 159 to purify air by filtering at least one of physical particles such as dust/fine dust/ultrafine dust, chemical substances such as odor particles/hazardous gas, and microorganisms such as bacteria/viruses.

The filter 159 may include at least one of a dust collecting filter to filter the physical particles such as the dust, a deodorizing filter to filter the chemical substances such as the gas, or a bacteriostatic filter to filter the microorganisms such as the bacterial viruses.

The portable air purifier 10 may include the filter 159 having the at least one of the dust collecting filter, the deodorizing filter, or the bacteriostatic filter. Therefore, the user may selectively use the at least one of the dust collecting filter, the deodorizing filter, or the bacteriostatic filter according to user preference. The purpose or a performance of the portable air purifier 10 may vary according to the selected filter type.

For example, the dust collecting filter may include a high efficiency particulate air (HEPA) filter. In addition, the deodorizing filter may include a carbon filter. In addition, the bacteriostatic filter may include an ionizer. However, the present invention is not limited thereto, and various types of filters may be included in the dust collecting filter, the deodorizing filter, and the bacteriostatic filter.

The filter 159 may be inserted into the insertion space inside the filter case 151 through the open rear surface of the filter case 151. That is, the filter 159 may be detachably coupled to the filter case 151. According to this embodiment, the filter 159 is mounted by simply inserting the filter 159 into the filter case 151 and the filter 159 is removed by taking out the filter 159 from the filter case 151. That is, the filter 159 may be easily and quickly mounted or removed. In addition, the filter 159 may be easily and quickly replaced as necessary, thereby facilitating maintenance of the portable air purifier 10 and replacement of the type of the filter as necessary.

### [Structure of battery]

A battery 160 may supply power to drive a portable air purifier 10. For the power supply, the battery 160 may be electrically connected to at least one of a fan assembly 140, a sub PCB 190, a main PCB 195, or a filter portion 150.

The battery 160 is accommodated in an accommodating space inside the case 120 and is disposed in second area (B). The second area (B) is disposed under first area (A) in which the fan assembly 140 and the filter portion 150 are provided. An upper boundary surface of the second area B may be defined by the fan assembly 140 and the filter portion 150 and a lower boundary surface and a side boundary surface of the second area B may be defined by a third surface 127 and a first surface 121 of the case 120.

The battery 160 is disposed under the fan assembly 140 and the filter portion 150 in the second area B. In addition, the battery 160 is disposed between a fan cover 130 and a rear cover 180. That is, the fan assembly 140 and the filter portion 150 are disposed on the battery 160, and the lower cover 135 of the fan cover 130 is disposed at a front side of the battery 160, and a rear cover 180 is disposed at a rear side of the battery 160.

The battery 160 may include a first coupler 162 and a second coupler 163. The first coupler 162 couples between the battery 160 and the filter portion 150. In addition, the second coupler 163 couples between the battery 160 and the fan cover 130.

The first coupler 162 is disposed on the battery 160. The first coupler 162 may be coupled to the second fan cover coupler 154b by a fastening member when the first coupler 162 contacts the second fan cover coupler 154b of the filter case 151. By the coupling between the first coupler 162 and the second fan cover coupler 154b, the battery 160 may be coupled to the filter portion 150.

In this case, the first coupler 162 is disposed between the third fastening boss 135a of the fan cover 130 and the second fan cover coupler 154b. The first coupler 162 may be coupled to the third fastening boss 135a and the second fan cover coupler 154b by a fastening member that passes through the third fastening boss 135a, the first coupler 162, and the second fan cover coupler 154b at one time when a front surface of the first coupler 162 contacts the third fastening boss 135a and a rear surface of the first coupler 162 contacts the second fan cover coupler 154b. That is, the fan cover 130, the filter portion 150, and the battery 160 may be coupled with a single fastening operation using a single fastening member.

A fourth fastening boss 135b of the fan cover 130 may be fitted into the second coupler. The fourth fastening boss 153b may be coupled to the second coupler 163 by the fastening member when the fourth fastening boss 135b is fitted into the second coupler 163. By the coupling between the second coupler 163 and the fourth fastening boss 135b, the fan cover 130 may be coupled to the battery 160.

In addition, the battery 160 may further include a third coupler 164. The third coupler 164 couples between the battery 160 and a rear cover 180.

### [Structure of sub PCB and main PCB]

A portable air purifier 10 may further include a sub PCB 190 and a main PCB 195.

The sub PCB 190 includes a sub substrate 191 and a plurality of buttons 192 and 193 disposed on the sub substrate 191. The buttons 192 and 193 may each be an operation button to turn on/off power of the portable air purifier 10, an operation button to adjust air volume of the portable air purifier 10, or a button to adjust volume. The sub PCB 190 is electrically connected to the main PCB 195 described below.

The sub PCB 190 may be disposed at a top of an inner side of a case 120. That is, the sub PCB 190 is disposed on a fan assembly 140 and a filter portion 150. The power button 192 and the air volume control button 193 disposed on the sub PCB 190 are exposed to an outside of the case 120 through a button through-hole 123a of the second surface 123 of the case 120. The user may turn on/off the portable air purifier 10 or adjust the air volume of the portable air purifier 10 by manipulating the exposed buttons.

In addition, the portable air purifier 10 may further include the main PCB 195 to manage hardware of the portable air purifier 10. The main PCB 195 may function as a controller of the portable air purifier 10.

The main PCB 195 is disposed under the fan assembly 140 in an accommodating space inside the case 120. That is, the main PCB 195 may be accommodated in second area (B) inside the case 120 and may be disposed between a lower cover 135 of a fan cover 130 and a battery 160.

For example, the main PCB 195 may be vertically disposed in parallel to the lower cover 135. Both sides of the main PCB 195 in a forward and rearward direction may be supported by the lower cover 135 and the battery 160 between the lower cover 135 and the battery 160.

The main PCB 195 may include a main substrate 196 and a plurality of elements 197 placed on the main substrate 191. The main substrate 191 may be electrically connected to each of the fan assembly 140, an acoustic portion 200, the battery 160, the sub PCB 190, and a sensor portion 300. The main PCB 195 may control the operation of the upper fan assembly 140 and the lower fan assembly 135 based on a command input through the buttons 192 and 193 or data sensed by the sensor portion 300.

In addition, the main PCB 195 may be electrically connected to the filter portion 150. For example, when the filter 159 includes an ionizer, the main PCB 195 may be electrically connected to the ionizer, and power may be supplied to the ionizer. Alternatively, the filter 129 may be electrically connected to the battery 160 to receive power directly from the battery 160.

### [Structure of rear panel]

A portable air purifier 10 may include a rear panel 170 disposed at a rear side of a case 120. For example, the rear panel 170 may be made of plastic resin.

The rear panel 170 suctions external air to an inside of the portable air purifier 10. The rear panel 170 includes a plurality of first suction inlets 170a. The plurality of first suction inlets 170a may penetrate or cut at least a portion of the rear panel 170. The external air may be easily suctioned to the inside of the portable air purifier 10 through the plurality of first suction inlets 170a.

The rear panel 170 is disposed at the rear side of the case 120 to cover an open rear portion of the case 120. The rear panel 170 may include a flat surface 171 and an inclined surface 173.

The flat surface 171 is disposed at a central portion of the rear panel 170 in a lateral direction. The flat surface 171 forms a plane in parallel to a front panel 110 and covers the open rear portion of the case 120. The flat surface 171 may be a hard surface at the central portion of the rear panel 170, thereby improving rigidity of the rear panel 170.

The inclined surfaces 173 are disposed at both sides of the flat surface 171 in the lateral direction. The inclined surface 173 is inclined toward a front of the case 120 from the flat surface 171. In this case, the inclined surface 173 advantageously includes a curved surface shape convex to the rear. In addition, at least a portion of the first suction inlet 170a is disposed on the inclined surface 173.

In this embodiment, most of an area of the first suction inlet 170a is disposed on the inclined surface 173. In addition, the plurality of first suction inlets 170a may be disposed on the inclined surfaces 173 provided at both sides of the rear panel 170 and to be spaced apart from one another in a vertical direction.

As the first suction inlet 170a is disposed on the inclined surface 173, the first suction inlet 170 faces a direction between a rear side and a side rather than the rear side or the side of the portable air purifier 10.

If the first suction inlet 170a faces the rear side of the portable air purifier 10, the first suction inlet 170a is blocked by the floor when the portable air purifier 10 is laid to face the rear panel 170 toward the floor. In this case, a phenomenon in which the air is not property suctioned into the portable air purifier 10 may occur.

If the first suction inlet 170a faces the side of the portable air purifier 10, a direction of suctioning air into the portable air purifier 10 and a direction of discharging the air from the portable air purifier 10 form an approximately right angle and cross each other. This air flow path structure causes an increase in flow path resistance inside the portable air purifier 10, thereby increasing noise of the portable air purifier 10 and degrading a performance of the portable air purifier.

In consideration of the above issue, in this embodiment, the first suction inlet 170a faces the direction between the rear side and the side of the portable air purifier 10, not toward the rear side or the side of the portable air purifier 10. In this case, when the portable air purifier 10 is laid in any direction, a separation space may be obtained between the first suction inlet 170a and the floor. Therefore, a sufficient air suction path may be obtained regardless of the laid state of the portable air purifier 10. In addition, the first suction inlet 170a is disposed close to the rear side of the portable air purifier 10, thereby addressing a concern that noise of the portable air purifier 10 is increased and the air purification performance of the portable air purifier 10 is degraded.

The rear panel 170 is coupled to a filter case 151 to cover the open rear portion of the case 120. The rear panel 170 may further include a rear panel locking portion 175. The rear panel locking portion 175 securely couples the rear panel 170 to the rear side of the case 120.

The rear panel locking portion 175 protrudes from an upper side of the rear panel 170. The rear panel locking portion 175 is inserted into a rear panel locking groove 156a defined on the filter case 151 and is locked to the filter case 151.

For example, the rear panel locking portion 175 may have a hook shape. The rear panel locking portion 175 may be coupled to the filter case 151 using the hook.

In addition, the rear panel 170 may further include a rear cover coupler 177. The rear cover coupler 177 is disposed at a lower side of the rear panel 170 facing the rear cover 180. The rear cover coupler 177 couples between the rear panel 170 and the rear cover 180.

### [Structure of rear cover]

According to this embodiment, a portable air purifier 10 may further include a rear cover 180 disposed at a rear side of a case 120 and under a rear panel 170. For example, the rear cover 180 may be made of the same plastic resin as the rear panel 170.

The rear cover 180 is disposed at the rear side of the case 120 together with the rear panel 170 to cover the open rear portion of the case 120. That is, the open rear surface of the case 120 is covered by the upper rear panel 170 and the lower rear cover 180.

The rear cover 180 has a shape similar to that of the rear panel 170. That is, the rear panel 170 and the rear cover 180 are identified as one member when the rear panel 170 and the rear cover 180 are coupled to each other.

Similar to the rear panel 170, the rear cover 180 may include a flat surface 181 and an inclined surface 183. The flat surface 181 is disposed at a lateral central portion of the rear cover 180 and forms a plane in parallel to the flat surface 171 of the rear panel 170.

The inclined surfaces 183 are disposed at lateral both sides and at a lower surface of the flat surface 181. The inclined surface 183 is inclined toward a front of the case 120 from the flat surface 181.

In addition, the rear cover 180 may further include a horizontal surface 185. The horizontal surface 185 forms a horizontal plane on an upper surface of the rear cover 180 facing the rear panel 170. That is, a rear surface of the rear cover 180 is formed by the flat surface 181, both side surfaces and the lower surface of the rear cover 180 are formed by the inclined surface 183, and the upper surface of the rear cover 180 is formed by the horizontal surface 185.

In addition, the rear cover 180 may include a second suction inlet 180a. The second suction inlet 180a passes through the rear cover 180. The second suction inlet 180a provides a passage to connecting the rear side of the case 120 and the battery 160 and a sensor portion 300. External air may flow into the battery 160 and the sensor portion 300 inside the second area B through the second suction inlet 180a.

The rear cover 180 is provided separately from the rear panel 170 and is coupled to the case 120 and the rear panel 170 to close the rear side of the battery 160. The rear cover 180 may further include a rear panel coupler 186 and a case coupler 187.

The rear panel coupler 186 couples between the rear panel 170 and the rear cover 180. The rear panel coupler 186 protrudes upward from the upper surface of the rear cover facing the rear panel 170, that is, the horizontal surface 185.

The rear panel coupler 186 is coupled to the rear cover coupler 177 disposed at the lower side of the rear panel 170. By the coupling between the rear panel coupler 186 and the rear cover coupler 177, the rear cover 180 is coupled to the lower side of the rear panel 170. That is, the rear panel 170 is stably coupled by the coupling between the rear panel locking portion 175 and the filter case 151 at the upper portion of the rear panel 170 and the coupling between the rear panel coupler 186 and the rear cover coupler 177 at the lower portion of the rear panel 170.

In this embodiment, the rear panel coupler 186 and the rear cover coupler 177 may be coupled to each other by inserting the protrusion-shaped rear panel coupler 186 into a fitting groove defined at an inner side of the rear cover coupler 177.

The case coupler 187 couples the rear cover 180 to the case 120. The case coupler 187 is inserted into a rear cover coupling groove 120c defined at a rear lower portion of the case 120 and is coupled to the case 120.

For example, the rear cover coupling groove 120c may penetrate the third surface 127 of the case 120 in a vertical direction. In addition, the case coupler 187 may have a shape of a protrusion that protrudes downward from the lower surface of the rear cover 180.

The lower side of the rear cover 180 may be coupled to the case 120 by coupling between the case coupler 187 and the rear cover coupling groove 120c. That is, an upper portion of the rear cover 180 may be coupled to the rear panel 170 and the lower portion of the rear cover 180 may be coupled to the case 120. Thereby, the rear cover 180 may be stably coupled to the rear side of the case 120 and the rear panel 170 and the rear cover 180 may support the coupled state thereof.

In addition, according to this embodiment, the rear cover 180 may further include a battery engaging portion 188. The battery engaging portion 188 couples between the rear cover 180 and the battery 160. The battery engaging portion 188 is disposed between the rear panel coupler 186 at the upper side thereof and the case coupler 187 at the lower side thereof. The battery engaging portion 188 is inserted into a third coupler 164 disposed at a rear side of the battery 160 and is engaged with the battery 160.

In addition, the battery 160 may further include a fourth coupler 168. The fourth coupler 168 couples between the rear cover 180 and the battery 160, similar to the third coupler 164. The fourth coupler 168 protrudes toward the rear cover 180 from the rear surface 161a of the battery case 161.

In addition, a fastening hole passes through an inside of the fourth coupler 168 and the horizontal surface 185 of the rear cover 180 in the vertical direction. The battery 160 may be coupled to the rear cover 180 by fastening the fourth coupler 168 and the horizontal surface 186 using a predetermined fastening member when the fastening hole of the fourth coupler 168 overlaps with the fastening hole of the horizontal surface 185.

The battery 160 is coupled to the filter case 151 and the fan cover 130 by the coupling between the first coupler 162 and the second fan cover coupler 154b and the coupling between the second coupler 163 and the fourth fastening boss 135b. Therefore, when the battery engaging portion 188 is inserted into the third coupler 164 and is locked to the battery 160, the movement of the rear cover 180 may be restricted to block separation of the rear cover 180 to a space behind the case 120.

That is, the upper portion of the rear cover 180 is coupled to the rear panel 170, the lower portion of the rear cover 180 is coupled to the case 120, and a middle portion of the rear cover 180 in the vertical direction is engaged with the battery 160. Therefore, the rear cover 180 may be coupled more stably.

### [Structure of sensor portion]

In this embodiment, a portable air purifier 10 may further include a sensor portion 300. The sensor portion 300 is disposed in an accommodating space inside a case 120 and is disposed in second area (B). The sensor portion 300 is disposed between a battery 160 and a rear cover 180. That is, the battery 160 is disposed at a front side of the sensor portion 300 and the rear cover 180 is disposed at a rear side of the sensor portion 300.

The sensor portion 300 may include various sensors to sense air quality around the portable air purifier 10 or in an indoor space where the portable air purifier 10 is disposed. For example, the sensors may include a dust sensor, a gas sensor, and the like. The sensor portion 300 may sense the air quality using the sensors and transmit the sensed information to a main PCB 195 to manage a hardware portion of the portable air purifier 10.

### [Installation structure of acoustic portion]

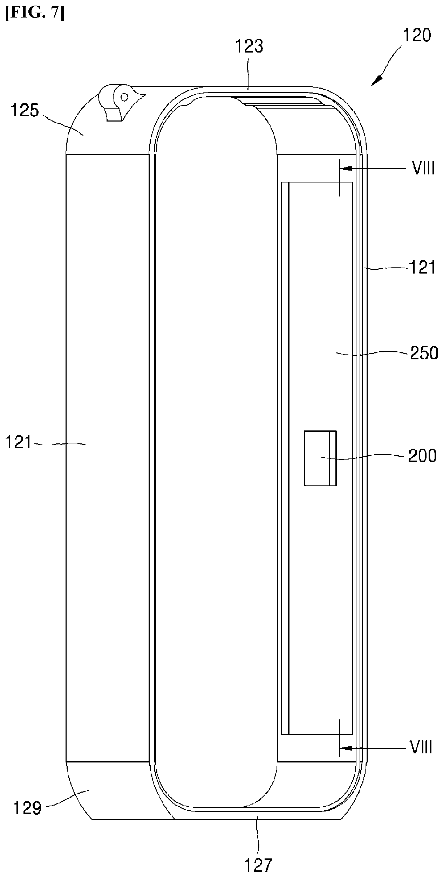

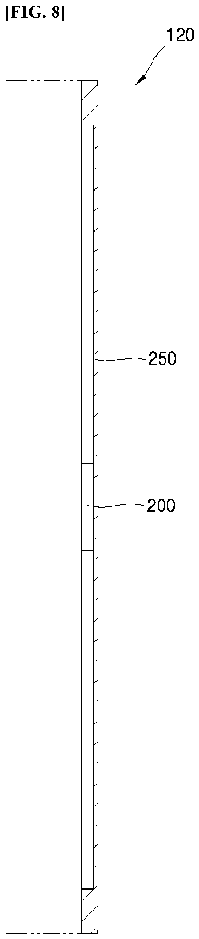

FIG. 7 shows a first example of a configuration of a speaker using an acoustic portion. FIG. 8 is a cross-sectional view taken along line "VIII-VIII" of FIG. 7.

Referring to FIGS. 6 and 7, a portable air purifier 10 according to this embodiment may further include an acoustic portion 200. The acoustic portion 200 may be accommodated in a case 120 together with a blowing fan assembly 140 and a filter portion 150.

According to the invention, the acoustic portion 200 includes a piezoelectric portion. The acoustic portion 200 includes a piezoelectric element. The piezoelectric element refers to an element having a property of occurring electric polarization when an external force is applied, resulting in a potential difference, and causing deformation or a deforming force when a voltage is applied, that is, a piezoelectric effect. Examples of piezoelectric elements include quartz, tourmaline, Rochelle salt, barium titanate (BaTiO₃), ammonium dihydrogen phosphate (NH₄H₂PO₄), and artificial ceramics (PZT).

The acoustic portion 200 including the piezoelectric element may be electrically connected to at least one of a sub PCB 190 or a main PCB 195. In this embodiment, the acoustic portion 200 is electrically connected to the main PCB 195. The piezoelectric element may receive a power from the main PCB 195 electrically connected to the battery 160.

The piezoelectric effect converts a mechanical change into an electrical change. When a compressive force or a tensile force is applied to the piezoelectric element from the outside, a (+) charge and a (-) charge move in opposite directions to each other, thereby generating a voltage corresponding to a potential difference.

By contrast, a reverse piezoelectric effect converts an electrical change into a mechanical effect, and when a (+) voltage and a (-) voltage are applied to an upper portion and a lower portion of the piezoelectric element, the piezoelectric element contracts or relaxes. Therefore, when the voltage is applied to the piezoelectric element, the piezoelectric element repeatedly contracts and relaxes. As the piezoelectric element repeats the contraction and the relaxation, the acoustic portion 200 vibrates.

The acoustic portion 200 may generate the vibration by receiving a sound source signal transmitted through the main PCB 195. That is, the main PCB 195 applies the voltage to the piezoelectric element based on a sound source signal input to the main PCB 195 and the acoustic portion 200 may vibrate based on the voltage applied by the main PCB 195.

In addition, the vibrator 250 is disposed in the case 120. The vibrator 250 generates sound by receiving the vibration generated by the acoustic portion 200. The vibrator 250 is integrated with the case 120. More specifically, the vibrator 250 is a portion of the case 120.

A thickness of the case 120 is a first thickness, the vibrator 250 has a second thickness that is smaller than the first thickness. A length of the first surface 121 in a second direction may be a thickness of the case 120 and a length of the second surface 123 in a third direction or a length of the third surface 127 in the third direction may be a thickness of the case 120

The second thickness may be determined in a range of 4 to 20% of the first thickness. For example, if the first thickness, that is, the thickness of the case 120 is 2.5 mm, the second thickness of the vibrator 250 may be determined in a range of 0.1 to 0.5 mm.

The range of the second thickness may be determined in consideration of the strength needed for the case 120 and properties needed for the vibrator 250.

The case 120 has sufficient strength to protect various components of the portable air purifier 10, such as the portable blowing fan assembly 140, the filter portion 150, and the battery 160, from external shocks.

The case 120 is made of metal having a light weight and high strength, such as aluminum, but in order for the case 120 to have the sufficient strength, the case 120 may have a sufficient thickness.

In addition, the vibrator 250 may vibrate by receiving the vibration transmitted by the piezoelectric element. When the thickness of the vibrator 250 is too large, the vibrator 250 has difficulties in properly vibrating. When the thickness of the vibrator 250 is too smalle, the case 120 may have difficulties in property performing a function for protecting the various components of the portable air purifier 10 from the external shocks.

In this embodiment, the thickness of the case 120 is set to about 2 to 3 mm and the thickness of the vibrator 250 is set to about 4 to 20% of the thickness of the case 120 in consideration of the above issue.

Therefore, the case 120 may obtain the sufficient strength to protect the various components of the portable air purifier 10 from the external shock and the vibrator 250 may easily vibrate to output sound.

The vibrator 250 may be concavely recessed from a portion of an inner surface of the case 120. In this case, the inner surface of the case 120 refers to a surface facing the fan assembly 140 and the filter portion 150 on the case 120. That is, the vibrator 250 is a portion of the case 120 having a reduced thickness, i.e. a recessed portion of the case 120.

In addition, the acoustic portion 200 is coupled to the vibrator 250 formed as described above. That is, the acoustic portion 200 may be disposed in the vibrator 250 to which the piezoelectric element accommodated in the case 120 is coupled. In this case, the piezoelectric element may contact the vibrator 250 in order for a vibration transmission rate to be close to "1" to effectively transmit the vibration of the piezoelectric element to the vibrator 250.

As the acoustic portion 200 is disposed in the vibrator 250, the vibrator 250, which is a portion of the case 120, functions as a vibration plate of a piezoelectric speaker. That is, when the vibrator 250 corresponding to an engraved surface of the case 120 is excited by the piezoelectric element, the vibrator 250 functions as a sounding plate. The vibrator 250 vibrating based on the excitation of the vibrating element functions as the sounding plate and occurs changes in ambient sound pressure to generate sound.

The acoustic portion 200 provided in the vibrator 250 may be disposed in a space surrounded by the vibrator 250 and an inner wall of the case 120 surrounding the vibrator 250. That is, the acoustic portion 200 may be disposed in the vibrator 250 to block or prevent further protrusion than the inner surface of the case 120 toward the blowing fan assembly 140 or the filter portion 150. In other words, the acoustic portion 200 is provided in the vibrator 250 which is a recessed portion in the inner surface of the case. By these means, a distance by which the acoustic portion 200 protrudes from the inner wall of the case 120 (outside of the vibrator 250, i.e. outside of the recessed portion) is reduced or even avoided. Thus, the recessed portion may at least partially compensate the additional thickness or width of the acoustic portion 200.

Therefore, an increase in distance between the blowing fan assembly 140 and the case 120 and distance between the filter portion 150 and the case 120 owing to the installation of the acoustic module 200 is not needed. That is, a reduction in size of the blowing fan assembly 140 or the filter portion 150 or an increase in size of the case 120 owing to the installation of the acoustic portion 200 is not needed.

Therefore, the sound transmission function thereof may be effectively performed by installing the acoustic portion 200 without degradation in the purification performance and changes in size of the device.

In addition, the vibrator 250 and the acoustic portion 200 are each disposed outside than each of the blowing fan assembly 140 and the filter portion 150 in the second direction. That is, the vibrator 250 and the acoustic portion 200 do not overlap with the blowing fan assembly 140 and the filter portion 150 when viewed from the front or the rear.

The arrangement signifies an arrangement of the vibrator 250 and the acoustic portion 200 at a position that deviates from a path through which air flows for the air purification. Therefore, even if the blowing fan assembly 140, the filter portion 150, and the acoustic portion 200 are disposed together inside the case 120, the acoustic portion 200 may not interfere with the air flow for the air purification. That is, there is little concern that the flow path resistance increases inside the portable air purifier 10 due to the acoustic portion 200 disposed inside the case 120.

That is, the portable air purifier 10 of this embodiment may perform the acoustic function and achieve a high level of air purification performance.

In addition, as the vibrator 250 and the acoustic portion 200 are provided at positions that deviate from the path through which the air flows for the air purification, an influence of the air flow for the air purification on the vibrator 250 and the acoustic portion 200 may be effectively inhibited.

That is, the vibrator 250 and the acoustic portion 200 are operated at positions that deviate from the path through which the air flows for the air purification, thereby reducing a possibility of influencing on a pattern of the vibration generated by the acoustic portion 200 and the vibrator 250 by the air flow. In this case, a phenomenon in which the sound is not properly transmitted or is distorted may be effectively inhibited.

In addition, the vibrator 250 may be disposed on a first surface 121 defining a side surface of the case 120 among several surfaces of the case 120. That is, the vibrator 250 may be concavely recessed from an inner surface of the first surface 121 in a second direction, that is, a horizontal direction. The acoustic portion 200 may be disposed in the first surface 121 of the case 120.

When the first surface 121 is spaced apart from each of the blowing fan assembly 140 and the filter portion 150 by a first distance, the vibrator 250 may be spaced apart from each of the blowing fan assembly 140 and the filter portion 150 by a second distance that is larger than the first distance.

When the blowing fan assembly 140 and the filter portion 150 closely contact the first surface 121, for example, the distance between the blowing fan assembly 140 accommodated in the case 120 and the first surface 121 and the distance between the filter portion 150 accommodated in the case 120 and the first surface 121 is less than 0.1 mm, the inner surface of the vibrator 250 facing the blowing fan assembly 140 and the filter module 150 may be spaced apart from each of the blowing fan assembly 140 and the filter module 150 by about 0.2 mm or more.

In addition, a length of the acoustic portion 200 in the second direction coupled to the inner surface of the vibrator 250 may be less than or equal to the second distance. In this case, the acoustic portion 200 may be disposed inside the case 120 to block further protrusion toward the blowing fan assembly 140 and the filter module 150 than the inner surface of the first surface 121.

A stepped portion may be defined between the inner surface of the vibrator 250 to place the acoustic portion 200 and the inner surface of the first surface 121 based on vibrator 250 being engraved from an inner circumferential surface of the first surface 121.

An outer surface of the vibrator 250 may be flush with an outer surface of the first surface 121. That is, when viewed from the outside of the case 120, the first surface 121 may have a smooth plane without the stepped portion.

Therefore, the case 120 may contribute to maintaining a smooth appearance of the portable air purifier as well as providing the vibration plate needed to output the sound and the installation surface need to install the acoustic portion 200.

### [Operation and effect of acoustic portion]

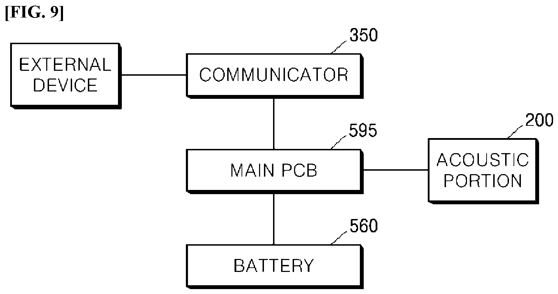

FIG. 9 is a schematic block diagram showing an example configuration of a portable air purifier.

Hereinafter, operations and effects of the acoustic portion are described with reference to FIGS. 6 to 9.

Referring to FIGS. 6 to 9, a portable air purifier 10 of this embodiment may further include a communicator 350. The communicator 350 may perform wireless communication between the portable air purifier 10 and a sensor portion 300 or an external device such as a mobile terminal.

The communicator 350 may include a near field communicator to communicate with the sensor portion 300 or the mobile terminal at near field. For example, the communicator 350 may include a Bluetooth communicator. In addition, the communicator 350 may include a communicator to support a low-power wireless communication scheme such as Bluetooth low energy (BLE) or a portion to support various near field communication schemes such as a near filed communication (NFC) module.

In this embodiment, the communicator 350 includes the Bluetooth communicator of a main PCB 595. The portable air purifier 10 may transmit and receive various pieces of information, data, and commands to and from the sensor portion 300 and the mobile terminal based on the communication performed by the communicator 350.

The main PCB 595 may include a controller. The controller may manage the function of the portable air purifier 10 and may output various signals. The controller may output a sound source signal to provide the sound source signal to the acoustic portion 200. The sound source signal may be an analog voltage signal and may be carried on a carrier wave and be output.

In addition, the main PCB 595 may include an amplifier. The amplifier may amplify the sound source signal output from the controller. The amplifier may output a high voltage, for example, an alternating current (AC) voltage of 10 Vpp or more to drive a piezoelectric element of the acoustic portion 200. For the output, the amplifier may include a high output amplifier.

When the sound source signal transmitted by the external device such as the mobile terminal is received through the communicator 350, the controller may output the sound source signal to provide the sound source signal to the acoustic portion 200 based on the received sound source signal. A power to output the signal may be supplied from a battery 560.

The sound source signal output by the controller may be amplified by the amplifier and then transmitted to the communicator 200. The piezoelectric element coupled to the vibrator 250 generates vibration based on the sound source signal transmitted to the communicator 200. The vibration generated by the piezoelectric element vibrates the vibrator 250 contacting the piezoelectric element and a sound may be output through the case 120 on which the vibrator 250 is disposed.

The portable air purifier 10 of this embodiment having the configuration may perform the air purification function and the sound transmission function with a single apparatus, thereby improving satisfaction of a user desiring to perform various functions with the single apparatus.

In addition, the portable air purifier 10 of this embodiment may include the rechargeable battery 560 to provide the power to purify the air and transmit the sound. Therefore, the portable air purifier 10 may perform the air purification function or the acoustic function even while carrying or in a place where power connection is difficult.

In addition, the portable air purifier 10 of this embodiment provides the vibration plate to transmit the sound by the engraved surface of the case 120 and inserts the acoustic portion 200 into the engraved surface of the case 120.

That is, electric components related to the air purification function, such as the blowing fan assembly 140, the filter portion 150, and the battery 560, and components related to the acoustic function, such as the acoustic portion 200, are intensively accommodated in the case 120 without influencing on each other's functions.

Therefore, the portable air purifier 10 of this embodiment may have a compact shape and high structural stability.

In addition, for the portable air purifier 10 of this embodiment, the vibrator 250 and the acoustic portion 200 may each be provided at a position that deviates from a path through which air flows for air purification.

Based on the arrangement, a possibility of interfering with, by the acoustic portion 200 accommodated in the case 120, the air flow for the air purification is lowered, and a possibility of adversely affecting the operations of the vibrator 250 and the acoustic portion 200 due to the air flow for the air purification is significantly lowered.

That is, a possibility of increasing flow path resistance inside the portable air purifier 10 due to the acoustic portion 200, a possibility of improperly transmitting the sound due to the air flow, or distorting the sound may be effectively reduced.

Therefore, the portable air purifier 10 of this embodiment may perform the air purification function and the acoustic function and may also perform a high level of air purification performance and acoustic performance.

In addition, according to this embodiment, the portable air purifier 10 may use the case 120 itself as the vibration plate instead of additionally providing the vibration plate, thereby maintaining the compact shape thereof without changes in outer appearance and size occurring due to the addition of the acoustic function, maintaining a smooth appearance, and performing an improved acoustic performance.

If the vibration plate is additionally disposed between the case 120 and the acoustic portion 200 to perform the sound function, a size of the case 120 may be increased to obtain a space where the vibration plate is disposed, which is a cause to increase the size of the portable air purifier 10.

In addition, the sizes of the components inside the case 120, that is, the blowing fan assembly 140 or the filter portion 150 may be reduced in order to dispose the vibration plate without increasing the size of the case 120. However, in this case, the air purification performance may be degraded.

In addition, if the sound is transmitted by an additional vibration plate disposed inside the case 120, not by the case 120 itself, the case 120 surrounding the vibration plate may interfere with the transmission of the sound. In this case, a grill may be disposed in the case 120 to transmit the sound to an outside of the case 120.

In this case, a complicated processing process of processing the grill in the case 120 may be added, which causes an increase in manufacturing time and manufacturing costs thereof. In addition, an additional process of disposing the vibration plate may also increase the difficulty of manufacturing and the manufacturing cost thereof.

In consideration of the above matter, in this embodiment, the case 120 itself may functions as the vibration plate to provide an effect of maintaining the compact shape without changes in the outer appearance and the size occurring due to the addition of the acoustic portion, an effect of achieving the improved acoustic performance while maintaining the smooth appearance, and the effect of reducing manufacturing difficulties and the manufacturing costs.

### [Another example of installation structure of acoustic portion]

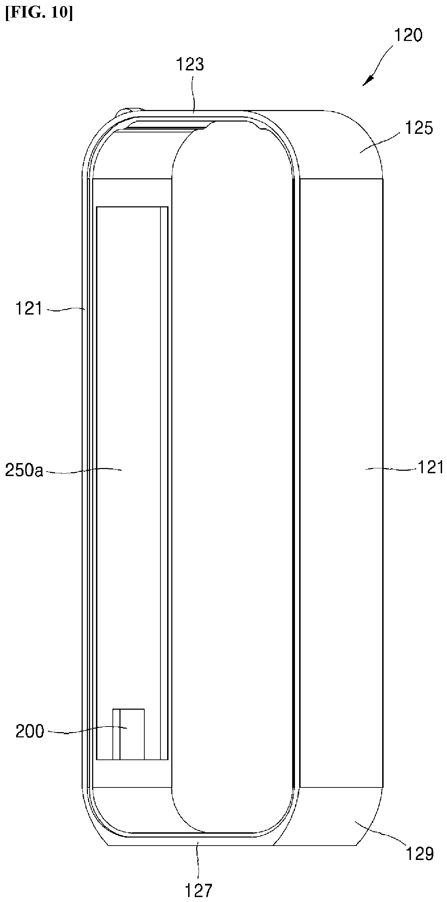

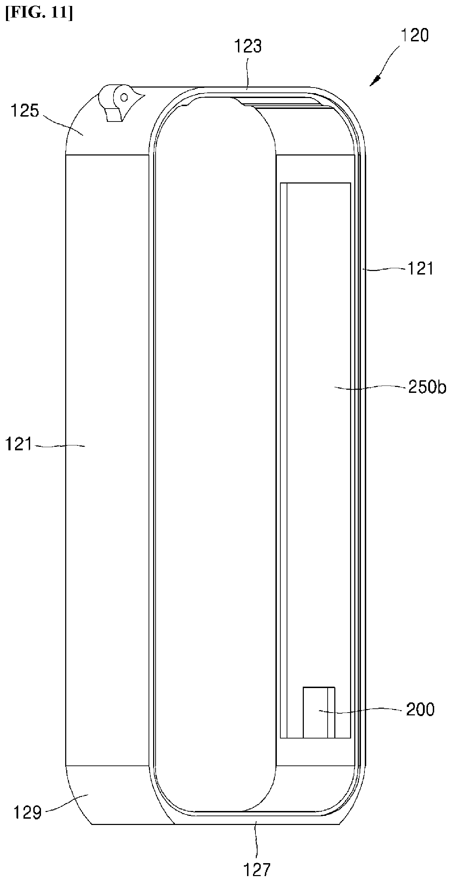

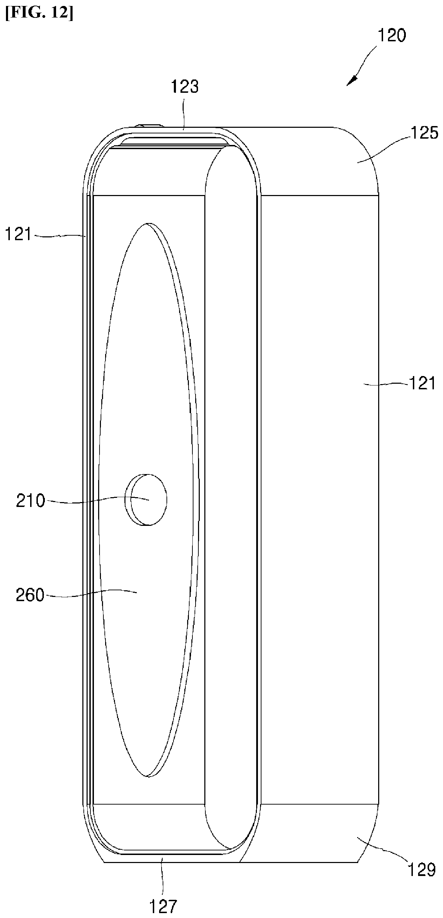

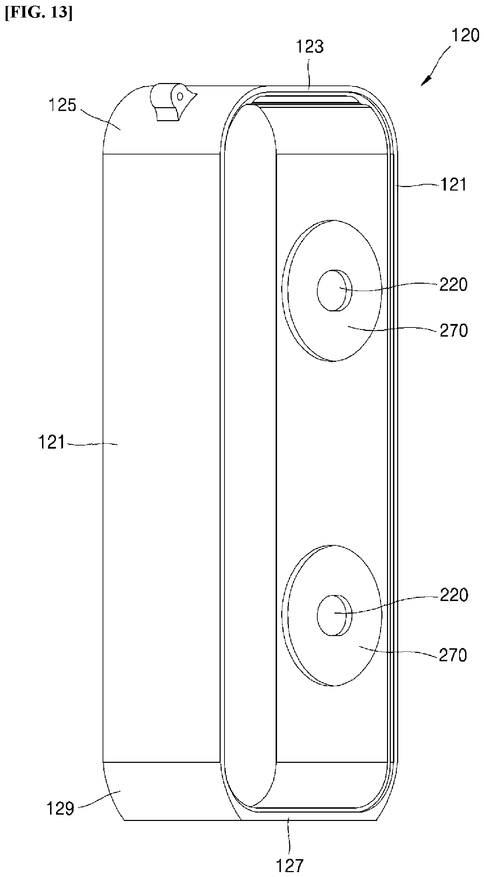

FIGS. 10 and 11 show a second example of a configuration of a speaker using an acoustic portion. FIG. 12 shows a third example of a configuration of a speaker using an acoustic portion. FIG. 13 shows a fourth example of a configuration of a speaker using an acoustic portion.

Hereinafter, various modifications of the installation structure of the acoustic portion are described with reference to FIGS. 10 to 13.

Referring to FIGS. 10 and 11, acoustic portions 200 may be disposed on two or more surfaces of a case 120, respectively. That is, two or more acoustic portions 200 are disposed inside a portable air purifier and may be disposed on at least two surfaces of the case 120, respectively.

For example, vibrators 250a and 250b may be disposed on a pair of first surfaces 121, respectively, and the acoustic portion 200 may be disposed on each of the vibrators 250a and 250b. When the acoustic portion 200 is arranged as described above, a stereo sound system may be provided in the portable air purifier.

That is, the acoustic modules 200 are disposed on a left surface and a right surface of the case 120 and reproduce the sound separately at two channels, for example, a left channel and a right channel, thereby providing rich and three-dimensional sound as well as providing a simple sound by the portable air purifier.

In addition, the position of the acoustic portion 200 on each of the vibrators 250a and 250b may be freely set as necessary. For example, the acoustic portion 200 may be disposed close to an upper portion of the case 120 or at a lower portion of the case 120 according to properties of the output sound and a transmission position of the sound, and the like.

In addition, the vibrators 250a and 250b have thickness that gradually changes in a vertical direction and the arrangement position of the acoustic portion 200 may be differently set according to the properties of the output sound.

For example, the vibrators 250a and 250b have the thickness that gradually increases toward the bottom, and the vertical position of the acoustic portion 200 may be differently set according to the properties of the output sound.

Referring to FIG. 12, a vibrator 260 may have various shapes, such as an oval shape or a circular shape, in addition to a rectangular shape. As the vibrator 260 may be processed on the case 120 to have a small thickness, the shape of the vibrator 260 is not limited to a specific shape and may have various shapes.

In addition, the acoustic portion 210 may have various shapes such as a cylinder and an elliptical cylinder in addition to a hexahedral shape.

In addition, as shown in FIG. 13, two or more acoustic portions 220 may be disposed at one surface of a case 120, and accordingly, two or more vibrators 270 may be disposed at one surface of the case 120. That is, two or more speakers may be disposed at one surface of the case 120.

In this case, speakers disposed in the case 120 may reproduce sound by with different properties. For example, a speaker may output a low-pitched sound and another speaker may output a high-pitched sound.

As another example, the speakers disposed in the case 120 may perform different functions or operations. For example, a speaker may reproduce sound and another speaker may perform a noise cancelling function for reducing noise occurring by the portable air purifier, for example, noise occurring during driving of the blowing fan.

While the present invention has been described with reference to exemplary embodiments shown in the figures, it is merely illustrative, and it will be understood by the person having ordinary knowledge in the art to which the present invention pertains that various modifications and equivalent other embodiments may be made as long as within the scope of the claims.

### [Description of Reference Numerals]

10: Portable air purifier
110: Front panel
110a: Discharge outlet
120: Case
121: Side surface
123: Upper surface
125: First connection surface
127: Lower surface
129: Second connection surface
130: Fan cover
140: Fan assembly
141: Blowing fan
150: Filter portion
151: Filter case
158: Edge protrusion
159: Filter
160: Battery
170: Rear panel
170a: First suction inlet
180: Rear cover
190: Sub PCB
195: Main PCB
200, 210, and 220: Acoustic portion
250, 260, and 270: Vibrator
300: Sensor portion
350: Communicator

## Claims

1. A portable air purifier (10), comprising:
a case (120) providing an accommodating space, wherein the case (120) has a first thickness;
a suction inlet (170a) defined at a first side of the case (120) and a discharge outlet (110a) defined at a second side of the case (120), the suction inlet (170a) and the discharge outlet (110a) being arranged in a first direction;
a blowing fan (141) and a filter (159) accommodated in the accommodating space and disposed between the suction inlet (170a) and the discharge outlet (1 10a);
an acoustic portion (200, 210, 220) accommodated in the accommodating space, the acoustic portion (200, 210, 220) being configured to generate vibration; and
a vibrator (250, 260, 270), wherein the acoustic portion (200, 210, 220) is coupled to the vibrator (250, 260, 270) and the vibrator (250, 260, 270) is configured to generate sound by receiving the vibration generated from the acoustic portion (200, 210, 220); **characterized in that**:
the acoustic portion (200, 210, 220) comprises a piezoelectric element,
wherein the vibrator (250, 260, 270) includes or is a portion of the case (120) having a second thickness that is smaller than the first thickness.

2. The portable air purifier (10) of claim 1, wherein the vibrator (250, 260, 270) includes or is a portion of an inner surface of the case (120) that is recessed towards an outside.

3. The portable air purifier (10) according to any one of the preceding claims, wherein the acoustic portion (200, 210, 220) is attached to a central portion of the vibrator (250, 260, 270) to be surrounded by the same.

4. The portable air purifier (10) according to any one of the preceding claims, wherein the acoustic portion (200, 210, 220) has a thickness which is less than or equal to a difference between the first thickness of the case (120) and the second thickness of the vibrator (250, 260, 270) in order to prevent protrusion of the acoustic portion (200, 210, 220) from the inner surface of the case (120).

5. The portable air purifier (10) according to any one of the preceding claims, wherein the case (120) comprises:
a pair of first surfaces (121) extending parallel to the first direction and facing each other;
wherein the vibrator (250, 260, 270) is disposed on at least one of the first surfaces (121).

6. The portable air purifier (10) of claim 5, wherein there is a plurality of said vibrator (250a, 250b) and there is a plurality of said acoustic portion, and the vibrators (250a, 250b) are disposed on the pair of the first surfaces (121), respectively, and one of said acoustic portions (200, 210, 220) is disposed on each of the vibrators (250a, 250b).

7. The portable air purifier (10) according to any one of the preceding claims,
wherein the vibrator (250, 260, 270) is concavely recessed from an inner surface of the case (120) adjacent to the vibrator (250, 260, 270).

8. The portable air purifier (10) according to claim 7 when depending on claim 5 or 6,
wherein the distance between the vibrator (250, 260, 270) and the blowing fan (141) or filter (159) is larger than the distance between the first surface (121) and the blowing fan (141) or filter (159).

9. The portable air purifier (10) according to any one of the preceding claims, wherein the acoustic portion (200, 210, 220) is spaced apart from the blowing fan (141) and the filter (159) and/or is disposed outside a flow path defined between the suction inlet (170a) and the discharge outlet (110a).

10. The portable air purifier (10) according to any one of the preceding claims,
wherein a stepped portion is defined between the vibrator (250, 260, 270) and the inner surface of the case (120).

11. The portable air purifier (10) according to any one of the preceding claims,
wherein an outer surface of the vibrator (250, 260, 270) is flush with an outer surface of the case (120) and/or wherein the vibrator (250, 260, 270) has a uniform outer appearance with the case (120).

12. The portable air purifier (10) according to any one of the preceding claims when depending on claim 5, wherein there is a plurality of said vibrator (250a, 250b) and there is a plurality of said acoustic portion,
wherein two or more speakers are disposed on the first surface (121), each including one of the acoustic portions (220) and one of the vibrators (270), and
wherein the speakers are configured to provide sound having different properties or perform different functions.

13. The portable air purifier (10) according to any one of the preceding claims, further comprising:
a communicator (350) configured to communicate with an external device,
wherein the acoustic portion (200, 210, 220) is configured to generate the vibration in response to a sound source signal from the communicator (350).

## Patentansprüche

1. Tragbarer Luftreiniger (10), der Folgendes umfasst:
ein Gehäuse (120), das einen Aufnahmeraum bereitstellt, wobei das Gehäuse (120) eine erste Dicke hat;
einen Saugeinlass (170a), der auf einer ersten Seite des Gehäuses (120) definiert ist, und einen Förderauslass (110a), der auf einer zweiten Seite des Gehäuses (120) definiert ist, wobei der Saugeinlass (170a) und der Förderauslass (110a) in einer ersten Richtung angeordnet sind;
ein Gebläse (141) und einen Filter (159), die im Aufnahmeraum aufgenommen sind und zwischen dem Saugeinlass (170a) und dem Förderauslass (110a) angeordnet sind;
einen Akustikabschnitt (200, 210, 220), der im Aufnahmeraum aufgenommen ist, wobei der Akustikabschnitt (200, 210, 220) konfiguriert ist, Schwingungen zu erzeugen; und
ein Schwingungselement (250, 260, 270), wobei der Akustikabschnitt (200, 210, 220) mit dem Schwingungselement (250, 260, 270) gekoppelt ist und wobei das Schwingungselement (250, 260, 270) konfiguriert ist, Schall zu erzeugen, indem es die Schwingungen aufnimmt, die vom Akustikabschnitt (200, 210, 220) erzeugt werden; **dadurch gekennzeichnet, dass**:
der Akustikabschnitt (200, 210, 220) ein piezoelektrisches Element umfasst,
wobei das Schwingungselement (250, 260, 270) einen Abschnitt des Gehäuses (120), der eine zweite Dicke aufweist, die kleiner als die erste Dicke ist, bildet oder diesen umfasst.

2. Tragbarer Luftreiniger (10) nach Anspruch 1, wobei das Schwingungselement (250, 260, 270) einen Abschnitt einer Innenfläche des Gehäuses (120), der nach außen vertieft ist, bildet oder diesen umfasst.

3. Tragbarer Luftreiniger (10) nach einem der vorhergehenden Ansprüche, wobei der Akustikabschnitt (200, 210, 220) an einem zentralen Abschnitt des Schwingungselements (250, 260, 270) befestigt ist, so dass er von diesem umgeben ist.

4. Tragbarer Luftreiniger (10) nach einem der vorhergehenden Ansprüche, wobei der Akustikabschnitt (200, 210, 220) eine Dicke aufweist, die kleiner oder gleich einer Differenz zwischen der ersten Dicke des Gehäuses (120) und der zweiten Dicke der Schwingungselements (250, 260, 270) ist, um das Vorstehen des Akustikabschnitts (200, 210, 220) von der Innenfläche des Gehäuses (120) zu verhindern.

5. Tragbarer Luftreiniger (10) nach einem der vorhergehenden Ansprüche, wobei das Gehäuse (120) Folgendes umfasst:
ein Paar erster Flächen (121), die zur ersten Richtung parallel verlaufen und zueinander zeigen;
wobei das Schwingungselement (250, 260, 270) an wenigstens einer der ersten Flächen (121) angeordnet ist.

6. Tragbarer Luftreiniger (10) nach Anspruch 5, wobei mehrere Schwingungselemente (250a, 250b) und mehrere Akustikabschnitte vorhanden sind und wobei die Schwingungselemente (250a, 250b) jeweils am Paar der ersten Oberflächen (121) angeordnet sind, und wobei einer der Akustikabschnitte (200, 210, 220) am jeweiligen Schwingungselement (250a, 250b) angeordnet ist.

7. Tragbarer Luftreiniger (10) nach einem der vorhergehenden Ansprüche,
wobei das Schwingungselement (250, 260, 270) von einer Innenfläche des Gehäuses (120), die an das Schwingungselement (250, 260, 270) angrenzt, konkav vertieft ist.

8. Tragbarer Luftreiniger (10) nach Anspruch 7, wenn abhängig von Anspruch 5 oder 6,
wobei der Abstand zwischen dem Schwingungselement (250, 260, 270) und dem Gebläse (141) oder dem Filter (159) größer als der Abstand zwischen der ersten Oberfläche (121) und dem Gebläse (141) oder dem Filter (159) ist.

9. Tragbarer Luftreiniger (10) nach einem der vorhergehenden Ansprüche, wobei der Akustikabschnitt (200, 210, 220) vom Gebläse (141) und vom Filter (159) beabstandet ist und/oder außerhalb eines Strömungspfads, der zwischen dem Saugeinlass (170a) und dem Förderauslass (1 10a) definiert ist, angeordnet ist.

10. Tragbarer Luftreiniger (10) nach einem der vorhergehenden Ansprüche,
wobei ein gestufter Abschnitt zwischen dem Schwingungselement (250, 260, 270) und der Innenfläche des Gehäuses (120) definiert ist.

11. Tragbarer Luftreiniger (10) nach einem der vorhergehenden Ansprüche,
wobei eine Außenfläche des Schwingungselements (250, 260, 270) mit einer Außenfläche des Gehäuses (120) bündig ist, und/oder wobei das Schwingungselement (250, 260, 270) ein einheitliches äußeres Erscheinungsbild mit dem Gehäuse (120) aufweist.

12. Tragbarer Luftreiniger (10) nach einem der vorhergehenden Ansprüche, wenn abhängig von Anspruch 5, wobei mehrere Schwingungselemente (250a, 250b) und mehrere Akustikabschnitte vorhanden sind,
wobei zwei oder mehr Lautsprecher an der ersten Fläche (121) angeordnet sind, wovon jeder einen der Akustikabschnitte (220) und eines der Schwingungselemente (270) umfasst, und
wobei die Lautsprecher konfiguriert sind, Schall bereitzustellen, der unterschiedliche Eigenschaften hat, oder unterschiedliche Funktionen auszuführen.

13. Tragbarer Luftreiniger (10) nach einem der vorhergehenden Ansprüche, der ferner Folgendes umfasst:
ein Kommunikationselement (350), das konfiguriert ist, mit einer externen Vorrichtung zu kommunizieren,
wobei der Akustikabschnitt (200, 210, 220) konfiguriert ist, die Schwingung in Reaktion auf ein Schallquellensignal vom Kommunikationselement (350) zu erzeugen.

## Revendications

1. Purificateur d'air portable (10), comportant :
un boîtier (120) fournissant un espace de réception, dans lequel le boîtier (120) a une première épaisseur ;
une entrée d'aspiration (170a) définie sur un premier côté du boîtier (120) et une sortie d'évacuation (110a) définie sur un second côté du boîtier (120), l'entrée d'aspiration (170a) et la sortie d'évacuation (1 10a) étant agencées dans une première direction ;
un ventilateur soufflant (141) et un filtre (159) reçus dans l'espace de réception et disposés entre l'entrée d'aspiration (170a) et la sortie d'évacuation (1 10a) ;
une partie acoustique (200, 210, 220) reçue dans l'espace de réception, la partie acoustique (200, 210, 220) étant configurée pour générer des vibrations ; et
un vibreur (250, 260, 270), dans lequel la partie acoustique (200, 210, 220) est couplée au vibreur (250, 260, 270) et le vibreur (250, 260, 270) est configuré pour générer du son en recevant les vibrations générées à partir de la partie acoustique (200, 210, 220) ;
**caractérisé en ce que** :
la partie acoustique (200, 210, 220) comporte un élément piézoélectrique,
dans lequel le vibreur (250, 260, 270) inclut ou est une partie du boîtier (120) ayant une seconde épaisseur qui est inférieure à la première épaisseur.

2. Purificateur d'air portable (10) selon la revendication 1, dans lequel le vibreur (250, 260, 270) inclut ou est une partie d'une surface intérieure du boîtier (120) qui est évidée vers un extérieur.

3. Purificateur d'air portable (10) selon l'une quelconque des revendications précédentes, dans lequel la partie acoustique (200, 210, 220) est fixée à une partie centrale du vibreur (250, 260, 270) pour être entourée par celui-ci.

4. Purificateur d'air portable (10) selon l'une quelconque des revendications précédentes, dans lequel la partie acoustique (200, 210, 220) a une épaisseur qui est inférieure ou égale à une différence entre la première épaisseur du boîtier (120) et la seconde épaisseur du vibreur (250, 260, 270) afin d'empêcher une saillie de la partie acoustique (200, 210, 220) à partir de la surface intérieure du boîtier (120).

5. Purificateur d'air portable (10) selon l'une quelconque des revendications précédentes, dans lequel le boîtier (120) comporte :
une paire de premières surfaces (121) s'étendant parallèlement à la première direction et l'une en face de l'autre ;
dans lequel le vibreur (250, 260, 270) est disposé sur au moins une des premières surfaces (121).

6. Purificateur d'air portable (10) selon la revendication 5, dans lequel ledit vibreur (250a, 250b) est présent en pluralité et ladite partie acoustique est présente en pluralité, et les vibreurs (250a, 250b) sont disposés sur la paire des premières surfaces (121), respectivement, et l'une desdites parties acoustiques (200, 210, 220) est disposée sur chacun des vibreurs (250a, 250b).

7. Purificateur d'air portable (10) selon l'une quelconque des revendications précédentes,
dans lequel le vibreur (250, 260, 270) est évidé de manière concave à partir d'une surface intérieure du boîtier (120) adjacente au vibreur (250, 260, 270).

8. Purificateur d'air portable (10) selon la revendication 7 lorsque dépendante de la revendication 5 ou 6,
dans lequel la distance entre le vibreur (250, 260, 270) et le ventilateur soufflant (141) ou le filtre (159) est supérieure à la distance entre la première surface (121) et le ventilateur soufflant (141) ou le filtre (159).

9. Purificateur d'air portable (10) selon l'une quelconque des revendications précédentes, dans lequel la partie acoustique (200, 210, 220) est espacée du ventilateur soufflant (141) et du filtre (159) et/ou est disposée à l'extérieur d'un trajet d'écoulement défini entre l'entrée d'aspiration (170a) et la sortie d'évacuation (1 10a).

10. Purificateur d'air portable (10) selon l'une quelconque des revendications précédentes,
dans lequel une partie étagée est définie entre le vibreur (250, 260, 270) et la surface intérieure du boîtier (120).

11. Purificateur d'air portable (10) selon l'une quelconque des revendications précédentes,
dans lequel une surface extérieure du vibreur (250, 260, 270) est affleurante à une surface extérieure du boîtier (120) et/ou le vibreur (250, 260, 270) a un aspect extérieur uniforme avec le boîtier (120).

12. Purificateur d'air portable (10) selon l'une quelconque des revendications précédentes lorsque dépendantes de la revendication 5, dans lequel ledit vibreur (250a, 250b) est présent en pluralité et ladite partie acoustique est présente en pluralité,
dans lequel deux haut-parleurs ou plus sont disposés sur la première surface (121), chacun incluant l'une des parties acoustiques (220) et l'un des vibreurs (270), et
dans lequel les haut-parleurs sont configurés pour fournir un son ayant différentes propriétés ou pour remplir différentes fonctions.

13. Purificateur d'air portable (10) selon l'une quelconque des revendications précédentes, comportant en outre :
un dispositif de communication (350) configuré pour communiquer avec un dispositif externe,
dans lequel la partie acoustique (200, 210, 220) est configurée pour générer les vibrations en réponse à un signal de source sonore provenant du dispositif de communication (350).
